# FASCICULE DE BREVET EUROPEEN

(11) **EP 4 679 024 B1**
(45) Date de publication et mention de la délivrance du brevet: **16.09.2026**
(21) Numéro de dépôt: 25187107.5
(22) Date de dépôt: 03.07.2025
(51) Int. Cl.: F28D 7/16, F28D 20/02

(54) **SYSTÈME DE STOCKAGE THERMIQUE METTANT EN OEUVRE UN MATÉRIAU À CHANGEMENT DE PHASE**
THERMISCHES SPEICHERSYSTEM UNTER VERWENDUNG EINES PHASENWECHSELMATERIALS
THERMAL STORAGE SYSTEM UTILIZING A PHASE CHANGE MATERIAL

(30) Priorité: 09.07.2024 FR 2407475
(43) Date de publication de la demande: 14.01.2026
(73) Titulaire: Commissariat à l'Energie Atomique et aux Energies Alternatives, 75015 Paris (FR)
(72) Inventeur: VESIN, Sébastien, 38054 Grenoble (FR); CHAMPEL, Bénédicte, 38054 Grenoble (FR)
(74) Mandataire: Santarelli

(56) Documents cités:
- EP-A1- 3 628 958
- WO-A1-2020/112885
- WO-A2-2009/105643
- FR-A1- 2 996 631
- GB-A- 2 506 354

## Description

L'invention se rapporte à un système de stockage thermique (SST) comportant un échangeur thermique, par exemple de type à tubes et calandre, ou à cuve, ou à plaques, et mettant en oeuvre un matériau à changement de phase (dit « MCP »).

L'invention trouve par exemple son application dans les réseaux de chaleur et/ou de froid, urbains, ruraux ou industriels, ou encore dans le stockage d'énergie solaire. L'invention trouve également des applications dans l'habitat, le transport thermique hors réseaux (camions, bateaux...) ou encore dans le management thermique de systèmes embarqués (batteries électriques) ou stationnaires.

Une application envisagée particulièrement intéressante est par exemple la sous-station des réseaux de chaleur, qui présente un enjeu important de compacité et offre une réplication potentielle importante (plusieurs dizaines de milliers de sous-stations en France).

Une technologie d'échangeur thermique très répandue est par exemple celle dite « à tubes et calandre ». Dans un tel système, une calandre dans laquelle circule un fluide est parcourue par un faisceau de tubes dans lesquels un autre fluide s'écoule. Les deux fluides échangent de l'énergie calorifique par conduction à travers la paroi des tubes.

Pour du stockage thermique, cette technologie est adaptée : il n'y a plus échange entre deux fluides en mouvement, mais entre un fluide caloporteur (HTF) qui circule dans les tubes (lequel est donc en mouvement) et un matériau à changement de phase (MCP) qui est contenu dans la calandre. Le matériau à changement de phase est alors considéré comme stagnant, i.e. statique (mis à part les mouvements de convection naturelle en phase liquide du matériau à changement de phase).

Lors d'une charge, le fluide caloporteur arrive à une température qui est supérieure à une température de changement d'état du matériau à changement de phase, par exemple sa température de fusion, et cède de l'énergie à celui-ci, ce qui entraine un changement d'état du matériau à changement de phase, par exemple, sa fusion.

Lors d'une décharge, le fluide caloporteur arrive à une température inférieure à une température de changement d'état du matériau à changement de phase, par exemple sa température de fusion (ou ici solidification) voire sa température de cristallisation, et récupère l'énergie précédemment stockée, en entrainant un changement d'état du matériau à changement de phase, par exemple sa solidification ou sa cristallisation.

De manière générale, le choix du sens de l'écoulement, ascendant ou descendant, dépend du souhait de favoriser un établissement d'une stratification thermique dans le MCP lors de la charge ou de la décharge (bien que la chaleur sensible soit souvent faible au regard de la chaleur latente pour justifier cet intérêt).

Pour favoriser l'établissement d'une stratification thermique dans le MCP lors d'une décharge du système de stockage thermique, il est préférable d'avoir un écoulement du fluide caloporteur du bas vers le haut (ascendant). Mais si l'obtention d'une stratification thermique dans le MCP lors de la décharge du système de stockage thermique n'est pas un critère de conception du système de stockage thermique (par exemple, lors d'une exploitation sur un faible écart de température), alors l'écoulement du fluide caloporteur peut être descendant.

Dans un système de stockage thermique avec un MCP, ce sont les contraintes thermomécaniques qui peuvent survenir dans le MCP qui vont généralement imposer le sens d'écoulement.

Une telle problématique provient du changement de densité du MCP lors du changement d'état.

La plupart des MCP ont une densité plus élevée à l'état solide qu'à l'état liquide, donc à l'état liquide, un MCP se dilate, i.e. occupe plus de volume, par exemple environ 10-15% de volume en plus. Or, certains matériaux pouvant servir de MCP ont un comportement inverse, par exemple l'eau ou le lithium.

Pour les MCP pour lesquels la densité à l'état solide est supérieure à la densité à l'état liquide, il est nécessaire d'assurer un écoulement descendant du fluide caloporteur lors de la charge (fusion du MCP). En effet, en apportant de la chaleur au système par le bas, le MCP fond et peut se dilater tandis qu'il est piégé à l'état solide plus en surface, générant des contraintes thermomécaniques sur le système. Pour la décharge en revanche, il y a moins de contrainte.

Pour les MCP pour lesquels la densité à l'état solide est inférieure à la densité à l'état liquide, la contrainte concerne le sens de l'écoulement lors de la décharge (solidification du MCP), qui doit être ascendant. Pour la charge en revanche, il y a moins de contrainte. Ainsi, avec un MCP « classique », c'est-à-dire ayant une densité plus élevée à l'état solide qu'à l'état liquide, donc qui se dilate à l'état liquide, i.e. prend plus de place, par exemple environ 10-15% plus de place, il est généralement préférable que la charge soit descendante, tandis que pour un MCP ayant un comportement inverse, par exemple tel que de l'eau ou du lithium, il est alors préférable de privilégier une décharge ascendante.

Avec un MCP classique, une décharge pourrait être descendante, tandis qu'avec de l'eau, une charge pourrait être ascendant.

Cependant, par commodité, les sens d'écoulement du fluide caloporteur pour une charge et une décharge sont généralement inversés l'un par rapport à l'autre, quel que soit le MCP.

Un tel système de stockage thermique avec un MCP permet de stocker une relativement grande quantité d'énergie thermique dans un relativement petit volume d'une part, tout en permettant d'autre part des temps de charge et décharge relativement courts, typiquement de quelques heures. De manière générale, les temps de stockage de la chaleur peuvent aller de quelques heures (stockage dit journalier) à quelques jours (stockage dit hebdomadaire) et jusqu'à quelques mois (stockage dit inter-saisonnier).

Toutefois, hormis quelques prototypes et démonstrateurs, peu de systèmes de stockage de chaleur latente (à matériau à changement de phase) ont été construits et sont à ce jour exploités à une échelle industrielle.

L'un des freins à leur déploiement à grande échelle est leur faible rentabilité, inhérente en grande partie au coût élevé de l'échangeur thermique à l'interface entre le fluide caloporteur et le matériau à changement de phase.

Il existe des systèmes de stockage de chaleur latente reposant sur le même schéma de conception, dans lesquels un faisceau de tubes, à l'intérieur desquels s'écoule le fluide caloporteur, est disposé dans une calandre contenant le matériau à changement de phase, les tubes étant pourvus d'ailettes.

De telles ailettes permettent notamment d'améliorer la conduction thermique du côté du matériau à changement de phase (les matériaux à changement de phase étant généralement peu conducteurs de chaleur).

Les dimensions de ces tubes à ailettes sont normalisées, et en grande partie conditionnées par le secteur de la pétrochimie.

Un avantage de la technologie de tubes à ailettes est de pouvoir proposer un prix généralement très attractif.

En revanche, un inconvénient majeur réside dans le diamètre maximal des ailettes qui reste relativement petit (environ 5-6 cm maximum), ce qui conduit à utiliser beaucoup de tubes à ailettes dans un système de stockage de chaleur latente pour diffuser la chaleur efficacement au sein du matériau à changement de phase.

Cet inconvénient augmente considérablement le coût final du système de stockage de chaleur latente et entraine de surcroit d'autres inconvénients, comme notamment :
- Un nombre important d'assemblages des tubes à ailettes sur une plaque collectrice supérieure et une plaque collectrice inférieure, lequel assemblage est souvent réalisé par soudage ou dudgeonnage, générant une seconde forte contrainte sur le coût du système ;
- Une très faible vitesse d'écoulement du fluide caloporteur dans les tubes, compte tenu du faible débit partiel de fluide caloporteur circulant dans chaque tube. Cette contrainte implique, pour améliorer l'échange de chaleur entre le fluide caloporteur et le matériau à changement de phase, d'avoir recours à des solutions comme un ajout d'inserts hydrauliques internes dans les tubes, ce qui entraine encore un surcoût conséquent consécutif à l'achat et à l'assemblage de ces inserts (pouvant être réalisé par brasage, sertissage, ou autre) dans les tubes à ailettes.

Par ailleurs, pour limiter les volumes de matériau à changement de phase libre (i.e. contenu dans des zones inactives thermiquement), il est préférable d'intégrer un grand nombre de tubes. Cette disposition peut impliquer que, pour assurer un sens du fluide caloporteur descendant en charge (en raison, en général, de la dilatation des matériaux à changement de phase lors de sa fusion), l'ensemble des tubes sont parcourus en parallèle par le fluide caloporteur, ce qui entraine de faibles débits partiels de fluide caloporteur par tube, et par conséquent une faible vitesse d'écoulement du fluide caloporteur dans chacun des tubes.

Cette faible vitesse d'écoulement entraine un faible coefficient d'échange convectif du fluide caloporteur en paroi d'un tube et donc un faible coefficient d'échange global entre le matériau à changement de phase et le fluide caloporteur, ce qui a pour conséquence finale une faible puissance d'échange thermique entre le matériau à changement de phase et le fluide caloporteur.

Cette situation est particulièrement rencontrée sur les réseaux de chaleur urbains ou industriels lorsque la disponibilité et la valeur du débit disponible sont faibles, entrainant voire accentuant les conséquences citées précédemment.

En outre, l'exploitation des systèmes de stockage thermique conduit généralement à considérer des profils de puissance très différents entre la phase de charge du système de stockage thermique et sa phase de décharge. Dans la majorité des cas, la puissance thermique disponible pour la charge est plus faible que la puissance à atteindre lors de la décharge.

Cette situation aussi est particulièrement rencontrée sur les réseaux de chaleur urbains où les profils d'usage conduisent à gérer des pics de demande, comme par exemple les appels de puissance du matin et du soir pour répondre aux besoins d'eau chaude sanitaire, et des creux de consommation comme par exemple la nuit.

Il peut par ailleurs survenir une instabilité du mode de convection du fluide caloporteur (HTF).

La demande de brevet français FR2996631 propose de diminuer le nombre de tubes d'un système de stockage thermique en ajoutant, autour des tubes à ailettes, des inserts externes en aluminium dont la géométrie en forme de flocons de neige permet d'optimiser la conduction dans le matériau à changement de phase. Toutefois, il demeure un jeu entre l'extérieur d'un tube et l'insert, qui entraine une forte résistance thermique préjudiciable à la performance du système. Mettre un insert en aluminium directement autour d'un tube en acier peut donc être pénalisant pour le transfert thermique. C'est pourquoi un tube à ailettes a été conservé et l'insert en aluminium placé autour des ailettes. Le jeu existe toujours mais est moins pénalisant car la surface d'échange est plus grande. Ce dispositif améliore donc la conduction dans le matériau à changement de phase mais serait encore améliorable en supprimant le jeu entre les ailettes et les inserts, jeu qui pénalise le transfert thermique, ou même idéalement en se passant des ailettes et ayant un contact direct entre l'insert en aluminium et le tube.

La demande de brevet EP2510302 propose d'améliorer l'échange thermique dans le matériau à changement de phase avec le même principe d'insert en aluminium que celui décrit ci-dessus, mais sans ailette autour du tube, par exemple en ajoutant des inserts en aluminium fabriqués en deux parties clipsées autour du tube en acier. Le clipsage de ce système ne permet pas un contact parfait avec le tube, et un jeu entre le tube et l'insert existe toujours. D'autre part cette conception multiplie le nombre de pièces et d'étapes d'assemblage.

Le document EP3628958 montre un système comme dans le préambule de revendication 1.

Plusieurs problèmes techniques sont donc rencontrés dans les systèmes de stockage de chaleur latente exploitant un matériau à changement de phase.

La présente invention a pour but de résoudre au moins en partie les inconvénients précités menant en outre à d'autres avantages.

A cet effet, est proposé, selon un premier aspect, un système de stockage thermique mettant en œuvre un matériau à changement de phase, le système de stockage thermique comportant le matériau à changement de phase, et un échangeur thermique comportant une borne supérieure et une borne inférieure configurées pour former une entrée ou une sortie d'un fluide caloporteur dans le système de stockage thermique,
l'échangeur thermique comportant un faisceau de conduits s'étendant entre la borne supérieure et la borne inférieure, le faisceau de conduits comportant au moins trois conduits incluant un premier conduit, un deuxième conduit et un troisième conduit, chacun des conduits étant configuré pour recevoir un écoulement du fluide caloporteur, au moins une partie de chacun des conduits étant en contact avec le matériau à changement de phase.

Les au moins trois conduits sont notamment configurés, pour un MCP classique, pour recevoir l'écoulement du fluide caloporteur en mono-passe, descendant, lors d'une charge et en multi-passes lors d'une décharge du système de stockage thermique.

Pour un autre type de MCP, par exemple un MCP de type « eau », les au moins trois conduits sont alors notamment configurés pour recevoir l'écoulement du fluide caloporteur en multi-passes lors d'une charge et en mono-passe, ascendant, lors d'une décharge du système de stockage thermique.

Par exemple, le système de stockage thermique comportant un distributeur supérieur s'étendant entre la borne supérieure et le faisceau de conduits, et un distributeur inférieur s'étendant entre le faisceau de conduits et la borne inférieure,
et le distributeur supérieur comportant une boite de répartition partielle supérieure et une boite de répartition supérieure de fluide, et le distributeur inférieur comportant une boite de répartition partielle inférieure de fluide et une boite de répartition inférieure de fluide, au moins le premier conduit débouchant d'une part dans la boite de répartition partielle supérieure en dehors de la boite de répartition supérieure de fluide, et d'autre part dans la boite de répartition inférieure de fluide en dehors de la boite de répartition partielle inférieure de fluide, au moins le deuxième conduit débouchant d'une part dans la boite de répartition supérieure de fluide et d'autre part dans la boite de répartition inférieure de fluide en dehors de la boite de répartition partielle inférieure de fluide, et au moins le troisième conduit débouchant d'une part dans la boite de répartition supérieure de fluide et d'autre part dans la boite de répartition partielle inférieure de fluide,
le distributeur inférieur comportant en outre une tubulure hydraulique partielle inférieure configurée pour permettre un écoulement du fluide caloporteur entre la boite de répartition partielle inférieure de fluide et la borne inférieure ,
la boite de répartition supérieure de fluide comportant un dispositif de clapet hydraulique supérieur, et la boite de répartition inférieure de fluide comportant un dispositif de clapet hydraulique inférieur,
le dispositif de clapet hydraulique supérieur et le dispositif de clapet hydraulique inférieur étant configurés pour être ouverts lors d'un écoulement de fluide caloporteur entrant par la borne supérieure et fermés lors d'un écoulement de fluide caloporteur entrant par la borne inférieure.

Un tel système de stockage thermique a donc une configuration hydraulique qui varie selon le sens de circulation du fluide caloporteur entre ses bornes.

Un tel système de stockage thermique est généralement utilisé selon une disposition verticale. Toutefois, un tel système de stockage thermique peut également être mis en œuvre selon une disposition horizontale, ou inclinée, de sorte que les termes « supérieur/inférieur » doivent alors s'entendre comme une référence à une latéralité du dispositif, par exemple « gauche/droite » ou « amont/aval ». Idem, un écoulement désigné ici comme ascendant/descendant se réfère alors à un écoulement dans un sens, ou dans un autre sens, par exemple un sens inverse.

La boite de répartition partielle supérieure est distincte de la boite de répartition supérieure de fluide ; elles sont par exemple séparées l'une de l'autre par une paroi mitoyenne.

De manière générale, l'écoulement est de préférence descendant pour faire passer le MCP de l'état solide à l'état liquide.

Pour faire passer le MCP de l'état liquide à l'état solide, l'écoulement peut-être indifféremment ascendant ou descendant.

Par exemple, dans un cas de stockage comportant un MCP dont la densité à l'état solide est supérieure à la densité à l'état liquide, il est alors préférable que l'écoulement lors de la charge soit descendant. Lors de la décharge, la direction d'écoulement a moins d'incidence, l'écoulement pouvant être plus librement ascendant ou descendant.

Dans un cas de stockage comportant un MCP dont la densité à l'état solide est inférieure à la densité à l'état liquide, il est préférable que l'écoulement soit ascendant en décharge. Il y a moins de contrainte sur l'écoulement lors de la charge, qui peut être plus librement ascendant ou descendant.

Le système de stockage thermique comporte alors des séparateurs hydrauliques, afin de diriger l'écoulement du fluide caloporteur au sein du faisceau de conduits, et des dispositifs à clapet hydraulique qui permettent le passage du fluide caloporteur dans un sens d'écoulement, et l'empêchent dans l'autre sens d'écoulement.

La présente invention permet notamment de sortir d'une zone de convection mixte, et du régime d'écoulement transitoire le cas échéant, non pas en disposant des inserts dans des tubes qui présentent comme contrainte d'être relativement couteux (car ils induisent des besoins d'approvisionnements et d'assemblages) et susceptibles de générer des zones d'encrassement, mais en configurant, passivement, l'écoulement du fluide caloporteur en multi-passes lors d'un écoulement ascendant, i.e. entrant par la borne inférieure, dans le système de stockage thermique pour augmenter la vitesse du fluide caloporteur dans les tubes. Cette configuration permet ainsi d'accéder à un nombre de Reynolds pour l'écoulement du fluide caloporteur plus élevé et à un mode de convection établi et stable (i.e. convection naturelle ou convection mixte).

Néanmoins, selon un exemple de réalisation, le système de stockage thermique peut comporter au moins un insert hydraulique interne positionné dans au moins un des conduits.

Utiliser un tel insert permet d'augmenter encore la vitesse du fluide dans un conduit, en particulier si le conduit est un tube.

Dans un exemple de réalisation, le système de stockage thermique est configuré pour comporter une seule passe de fluide caloporteur lors d'un écoulement depuis la borne supérieure vers la borne inférieure.

Dans un exemple de réalisation, le système de stockage thermique est configuré pour comporter un nombre impair de passes de fluide caloporteur lors d'un écoulement depuis la borne inférieure vers la borne supérieure, et comportant au moins trois passes.

Dans un exemple de réalisation, le système de stockage thermique est configuré pour répartir un écoulement de fluide caloporteur, s'écoulant depuis la borne supérieure vers la borne inférieure, dans tous les conduits du faisceau de conduits.

Dans un exemple de réalisation, le système de stockage thermique est configuré pour faire parcourir un écoulement de fluide caloporteur, s'écoulant depuis la borne inférieure vers la borne supérieure, dans le troisième conduit, puis le deuxième conduit puis le premier conduit.

Dans un exemple de réalisation, le dispositif de clapet hydraulique supérieur comporte un système passif configuré pour être ouvert par une différence de pression du fluide caloporteur de part et d'autre du dispositif de clapet hydraulique supérieur.

Dans un exemple de réalisation, le dispositif de clapet hydraulique inférieur comporte un système passif configuré pour être ouvert par une différence de pression du fluide caloporteur de part et d'autre du dispositif de clapet hydraulique inférieur.

L'ouverture des clapets s'effectue de manière passive, uniquement actionnée par la différence de pression du fluide caloporteur à leurs bornes. Le cas échéant, la différence de pression du fluide caloporteur aux bornes de chaque clapet est suffisante pour détendre un optionnel ressort de rappel équipant chaque clapet.

Dans un exemple de réalisation, au moins l'un du dispositif de clapet hydraulique supérieur et du dispositif de clapet hydraulique inférieur comporte au moins un clapet à ressort.

Dans un exemple de réalisation, l'au moins un clapet à ressort comporte au moins un ressort de rappel et un volet attaché au ressort de rappel.

Le ressort de rappel est par exemple configuré pour ramener le volet en position fermée et notamment pour maintenir le volet en position fermée quand cela est souhaité, en compensant son poids lorsqu'il est soumis à la gravité.

L'au moins un ressort comporte par exemple un ressort hélicoïdal, et/ou un ressort plat, et/ou une lame-ressort.

Le ressort hélicoïdal peut comporter un fil rond ou plat.

En fonctionnement, les forces qui s'exercent sur le volet sont :
- Un poids du volet (vers le bas),
- Une force de rappel du ressort (vers le haut),
- Un écart de pression du fluide de part et d'autre du volet.

Pour que le clapet soit en position fermée avec un écoulement ascendant, la force de rappel du ressort et la pression d'écoulement du fluide doivent donc être plus importants que le poids du volet.

A l'inverse, pour que le clapet soit ouvert avec un écoulement vers le bas, le poids du volet et la pression d'écoulement du fluide doivent être plus importants que la force de rappel du ressort.

En l'absence d'écoulement, au moins l'un parmi le dispositif de clapet hydraulique supérieur et le dispositif de clapet hydraulique inférieur est de préférence fermé, voire les deux sont fermés.

Selon une option intéressante, le système de stockage thermique peut comporter un déflecteur pour orienter un jet de fluide arrivant de la borne inférieure et générer un effet de jet qui maintient le dispositif de clapet hydraulique inférieur fermé.

Dans un exemple de réalisation, l'échangeur thermique comporte une plaque collectrice supérieure et/ou une plaque collectrice inférieure.

Par exemple, les conduits du faisceau de conduits s'étendent de la plaque collectrice supérieure à la plaque collectrice inférieure.

Un tel système permet d'utiliser des conduits standards, ou de toute taille souhaitée, ce qui est moins contraignant, tout en ayant une relativement grande surface d'échange avec le MCP.

Dans un exemple de réalisation, au moins l'un des conduits du faisceau de conduits comporte au moins un tube.

Dans un exemple de réalisation, l'au moins un tube comporte une surface extérieure portant des ailettes d'échange thermique.

Dans un exemple de réalisation, au moins l'un des conduits du faisceau de conduits comporte au moins une plaque délimitant un passage du fluide dans un conduit.

Dans un exemple de réalisation, le système de stockage thermique comporte au moins une cloison délimitant au moins un conduit.

Par exemple, le système de stockage thermique est configuré pour que l'écoulement de fluide contourne la cloison lors d'un écoulement de fluide caloporteur entrant par la borne inférieure.

Dans un exemple de réalisation, l'échangeur thermique comporte au moins une capsule contenant le matériau à changement de phase.

Dans un exemple de réalisation, le système de stockage thermique comporte une calandre contenant le matériau à changement de phase, l'échangeur thermique étant disposé dans la calandre.

Dans un exemple de réalisation, le système de stockage thermique comporte au moins un élément de constriction.

Un élément de constriction est configuré pour augmenter des pertes de charges, et donc réduire le débit du fluide caloporteur.

Un tel élément de constriction peut être disposé, dans le système de stockage thermique, dans, avant ou après au moins un des conduits.

Par exemple, l'au moins un élément de constriction est disposé dans une partie d'au moins une tubulure hydraulique.

Dans un exemple de réalisation, l'au moins un élément de constriction est disposé dans une tubulure hydraulique de la borne supérieure.

La constriction du débit peut être obtenue par ajout d'un élément et/ou par une déformation d'une paroi formant un conduit ou une tubulure ou autre, selon où l'élément de constriction est disposé.

Dans un exemple de réalisation, le matériau à changement de phase comporte tout type de matériau, comme par exemple une paraffine, un alcool gras, un acide gras, un alcool de sucre, un hydrate de sel, ou autre, ou encore par exemple de l'eau ou du lithium. Dans un exemple de réalisation, le fluide caloporteur peut être de l'eau, par exemple sous forme liquide ou vapeur.

L'invention est donc particulièrement avantageuse pour un stockage de chaleur dense énergétiquement (exprimé en kWh/m³) pour les réseaux de chaleur urbains ou industriels, avec des attentes différentes entre la puissance ou temps de charge (puissance faible - durée longue) et la puissance ou temps de décharge (puissance élevée - durée courte).

Un tel système de stockage d'énergie (à matériau à changement de phase), présente ainsi un rendement et des performances de transfert de chaleur entre le fluide caloporteur et le matériau à changement de phase satisfaisants.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
la figure 1 représente schématiquement un principe général d'un système de stockage thermique selon un exemple de réalisation ;
la figure 2 illustre des tubes comportant des ailettes ;
la figure 3 représente un détail de la figure 2 ;
la figure 4 présente un graphe extrait de Martinelli & al. « Experimental study of an externally finned tube with internal heat transfer enhancement for phase change thermal energy storage » 7th European Thermal Scientific Conference (EUROTHERM 2016) ;
la figure 5 représente un système de stockage thermique selon un premier exemple de réalisation de la présente invention ;
la figure 6 illustre un chemin hydraulique du fluide caloporteur lors d'un écoulement depuis la borne supérieure, ici descendant, dans le système de stockage thermique de la figure 5 ;
la figure 7 illustre un chemin hydraulique du fluide caloporteur lors d'un écoulement depuis la borne inférieure dans le système de stockage thermique de la figure 5 ;
La figure 8 représente un faisceau de conduits en vue de dessus selon un exemple de réalisation ;
la figure 9 représente un système de stockage thermique selon un deuxième exemple de réalisation de la présente invention ;
la figure 10 représente un système de stockage thermique selon un troisième exemple de réalisation de la présente invention ;
la figure 11 représente un système de stockage thermique selon un quatrième exemple de réalisation de la présente invention ;
la figure 12 illustre un élément de constriction optionnel dans une tubulure hydraulique d'un système de stockage thermique selon un exemple de réalisation de la présente invention ;
la figure 13 représente un système de stockage thermique selon un cinquième exemple de réalisation de la présente invention ;
la figure 14 illustre un chemin hydraulique du fluide caloporteur lors d'un écoulement depuis la borne supérieure dans le système de stockage thermique de la figure 13 ; et
la figure 15 illustre un chemin hydraulique du fluide caloporteur lors d'un écoulement depuis la borne inférieure dans le système de stockage thermique de la figure 13.

Un système de stockage de chaleur latente exploitant un matériau à changement de phase (désigné « MCP ») fonctionne par valorisation de chaleur latente d'un changement d'état liquide - solide (voire solide - solide) d'un matériau à changement de phase.

Ainsi, un tel matériau à changement de phase a une température de changement d'état, par exemple une température de fusion, en-dessous de laquelle le matériau à changement de phase est dans un premier état, par exemple à un état solide, et au-dessus de laquelle le MCP est dans un deuxième état, par exemple à un état liquide. Pour un matériau à changement de phase solide - liquide, une énergie liée à la chaleur latente est absorbée par le MCP lors de la fusion du matériau à changement de phase et est restituée par le MCP lors de la solidification du matériau à changement de phase. La charge d'un stockage de chaleur latente se caractérise généralement par la fusion du matériau à changement de phase, tandis que la décharge se caractérise généralement par la solidification dudit matériau à changement de phase.

A titre d'exemple, c'est le phénomène inverse qui est considéré pour un stockage de frigories (par exemple, le matériau à changement de phase est une glace ou hydrate de sel) trouvant son application sur un réseau de froid.

La quantité d'énergie thermique stockée s'exprime avec la relation suivante : $ΔQ = m ⋅ {Δh}_{lv}$ Où : m est la masse (en kilogramme [kg]) et
Δhₗᵥ est l'enthalpie massique de changement de phase solide-liquide (en kilojoule par kilogramme [kJ/kg]).

Un des avantages majeurs d'une telle technologie est que le changement de phase se fait à pression et température quasi-constantes.

Par conséquent, la décharge de l'énergie stockée peut se faire à température quasiment constante et proche de la température de changement de phase du matériau.

L'enthalpie de changement de phase est relativement importante en comparaison de la variation d'énergie sensible d'un matériau, sur un relativement faible écart de température.

Par conséquent, les systèmes de stockage avec matériau à changement de phase sont intéressants car la quantité d'énergie stockée par unité de volume (et de masse) est supérieure à celle obtenue par un système sensible sur la même gamme de température exploitée (i.e. meilleure densité énergétique de stockage).

De ce fait, les volumes du système de stockage et du matériau contenu sont réduits, ce qui limite les pertes thermiques qui sont proportionnelles à la surface extérieure du réservoir et ce qui peut aussi possiblement diminuer le prix par exemple pour les systèmes pressurisés.

Une technologie de stockage à matériau à changement de phase très répandue est celle dite « à tubes et calandre ».

Dans un tel système, une calandre, contenant un matériau à changement de phase, est parcourue par un faisceau de tubes dans lesquels un fluide caloporteur (HTF) s'écoule. Le MCP et le fluide caloporteur échangent de l'énergie par conduction à travers la paroi des tubes.

Le matériau à changement de phase est alors considéré comme stagnant (mis à part les mouvements de convection naturelle en phase liquide du matériau à changement de phase).

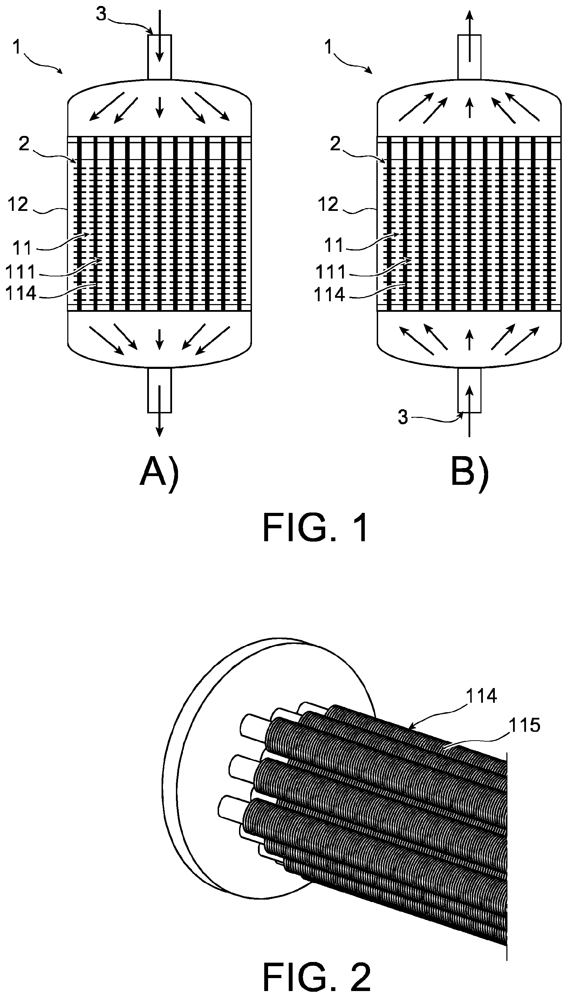

La figure 1 illustre un tel système de stockage thermique 1.

Le système de stockage thermique 1 comporte une calandre 12 contenant un matériau à changement de phase (MCP) 2.

Le système de stockage thermique 1 comporte en outre un échangeur thermique 11.

L'échangeur thermique 11 comporte un faisceau 111 de tubes 114 dans lesquels un fluide caloporteur 3 s'écoule lors du fonctionnement du système.

L'échangeur thermique 11 est disposé dans la calandre 12 et le MCP 2 enveloppe au moins une partie de chacun des tubes 114.

Chacun des tubes 114 a une paroi d'une épaisseur déterminée.

En fonctionnement, le matériau à changement de phase 2 (qui entoure au moins une partie des tubes 114) et le fluide caloporteur 3 (qui s'écoule dans les tubes 114) échangent ainsi de l'énergie par conduction à travers la paroi des tubes 114.

Lors d'un écoulement descendant, par exemple une charge, schématisé figure 1 A), le fluide caloporteur 3 arrive à une température supérieure à une température de changement d'état du matériau à changement de phase 2, par exemple sa température de fusion, et cède de l'énergie à celui-ci, ce qui entraine sa fusion (ou plus généralement un changement d'état).

Lors d'un écoulement ascendant, par exemple une décharge, schématisée figure 1 B), le fluide caloporteur 3 entre à une température inférieure à une température de changement d'état du matériau à changement de phase 2, par exemple sa température de fusion, voire sa température de cristallisation, et récupère l'énergie précédemment stockée, en entrainant la solidification du matériau à changement de phase (ou plus généralement un changement d'état).

De manière générale, un écoulement est de préférence descendant pour faire passer le MCP de l'état solide à l'état liquide. Pour faire passer le MCP de l'état liquide à l'état solide, l'écoulement peut-être indifféremment ascendant ou descendant.

Ceci est dû au fait qu'en changeant d'état, un matériau change de densité. La plupart des MCP ont une densité plus élevée à l'état solide qu'à l'état liquide, donc à l'état liquide, un MCP se dilate, i.e. occupe plus de volume, par exemple environ 10-15% de volume en plus. Or, certains matériaux pouvant servir de MCP ont un comportement inverse, par exemple l'eau et le lithium.

Par commodité, la présente description se réfère au cas général des MCP ayant une densité à l'état solide plus élevée que celle à l'état liquide.

En considérant un MCP ayant une densité à l'état solide plus faible qu'à l'état liquide, il est préférable que l'écoulement soit ascendant en décharge (cristallisation).

De ce fait, la disposition des collecteurs/distributeurs et des clapets décrits dans les modes de réalisation présentés ci-après, est alors en symétrie transversale, i.e. de sorte que l'écoulement ascendant soit mono-passe, et l'écoulement descendant soit multi-passes.

Comme l'illustre la figure 2, il existe des systèmes de stockage de chaleur latente reposant sur le même schéma de conception, dans lesquels les tubes 114 comportent des ailettes 115.

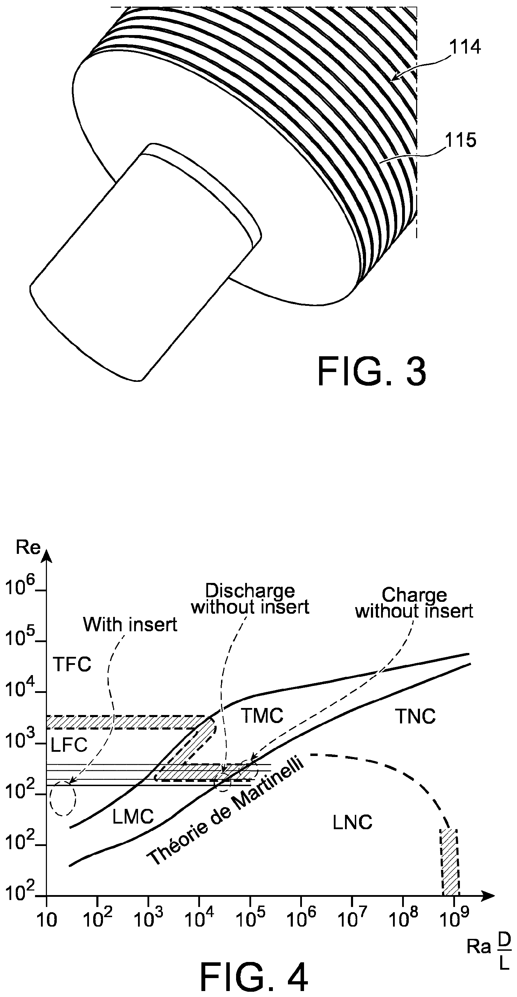

La figure 3 montre plus en détail un tel tube 114 pourvu d'ailettes 115 pour améliorer la conduction thermique du côté du matériau à changement de phase (les matériaux à changement de phase étant généralement peu conducteurs de chaleur).

En effet, les matériaux à changement de phase couramment utilisés (comme par exemple les sels hydratés, paraffines, alcools gras) possèdent une faible conductivité thermique.

Afin d'accroitre la conductivité thermique dans le matériau à changement de phase choisi, tout en limitant les coûts de réalisation des échangeurs thermiques, il est intéressant d'utiliser des tubes à ailettes.

Notamment pour des raisons de coûts et de moyens de production, des tubes à ailettes de dimensions normalisées sont généralement utilisés.

La figure 4 présente par exemple un diagramme illustrant le nombre de Reynolds en ordonnées (caractérisant le régime d'écoulement) en fonction de Ra*D/L en abscisses pour des tubes verticaux, ou Ra est le nombre de Rayleigh, D le diamètre hydraulique de l'écoulement et L sa longueur caractéristique.

Le nombre adimensionnel de Rayleigh (Ra) exprime le mode de transfert thermique prédominant au sein d'un fluide entre la conduction thermique (bas Rayleigh) et la convection naturelle (haut Rayleigh).

Le ratio « D/L » permet de prendre en compte un rapport des grandeurs géométriques de l'écoulement.

Le nombre adimensionnel de Reynolds (Re) exprime le régime d'écoulement : l'écoulement est laminaire à bas Re, turbulent à haut Re, et transitoire entre les deux (zone hachurée sur la figure 4).

Ainsi, en fonction de ces paramètres, l'écoulement peut être qualifié comme suit :
- LFC : écoulement dit « Laminar Forced Convection », i.e. laminaire à convection forcée ;
- TFC : écoulement dit « Turbulent Forced Convection », i.e. turbulent à convection forcée ;
- LMC : écoulement dit « Laminar Mixed Convection », i.e. laminaire à convection mixte ;
- TMC : écoulement dit « Turbulent Mixed Convection », i.e. turbulent à convection mixte ;
- LNC : écoulement dit « Laminar Natural Convection », i.e. laminaire à convection naturelle ; ou
- TNC : écoulement dit « Turbulent Natural Convection », i.e. turbulent à convection naturelle.

Cette figure montre que les conditions d'exploitation des stockages thermiques (débit et températures du fluide caloporteur) généralement rencontrées sur les réseaux de chaleur, entrainent des conditions défavorables pour le transfert thermique entre le fluide caloporteur et le matériau à changement de phase, particulièrement en raison du mode de convection du fluide caloporteur.

Dans l'exemple illustré figure 4, des conditions thermo-hydrauliques du fluide caloporteur s'écoulant dans un système de stockage thermique dont les tubes sont dépourvus d'inserts induisent un mode d'échange thermique en convection mixte du fluide caloporteur (de surcroit dans un régime d'écoulement transitoire). L'échange thermique en convection mixte a pour contrainte d'être particulièrement instable, entrainant des variations du coefficient d'échange thermique global et par conséquent de la puissance thermique échangée.

Le graphique de la figure 4 illustre par ailleurs qu'une mise en place d'inserts à l'intérieur des tubes pour réduire la section hydraulique a pour conséquence positive de sortir de la zone de convection mixte (ainsi que du régime d'écoulement transitoire).

Plusieurs problèmes techniques sont donc rencontrés dans un système de stockage de chaleur latente exploitant un matériau à changement de phase.

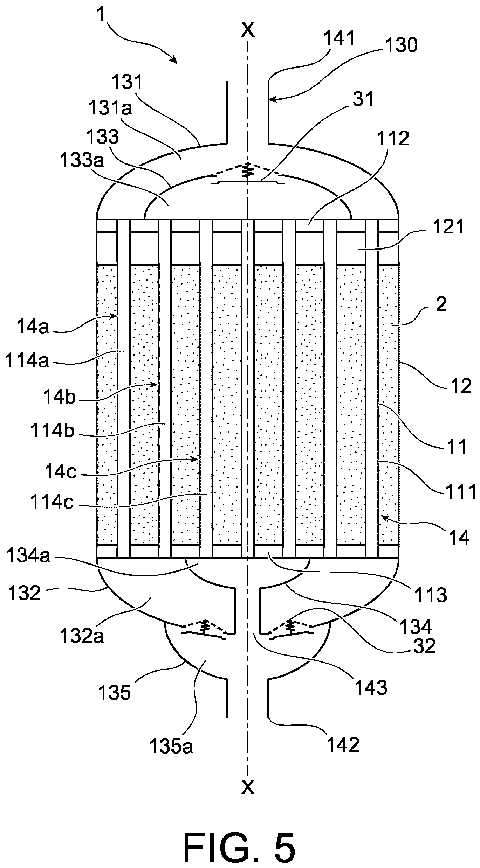

Les figures 5 à 7 illustrent un système de stockage thermique (SST) 1 mettant en oeuvre un matériau à changement de phase (MCP) 2 selon un premier exemple de réalisation de la présente invention.

Comme illustré sur la figure 5, le système de stockage thermique 1 comporte ici une calandre 12.

La calandre 12 désigne ici une enceinte formant une enveloppe du système de stockage thermique 1.

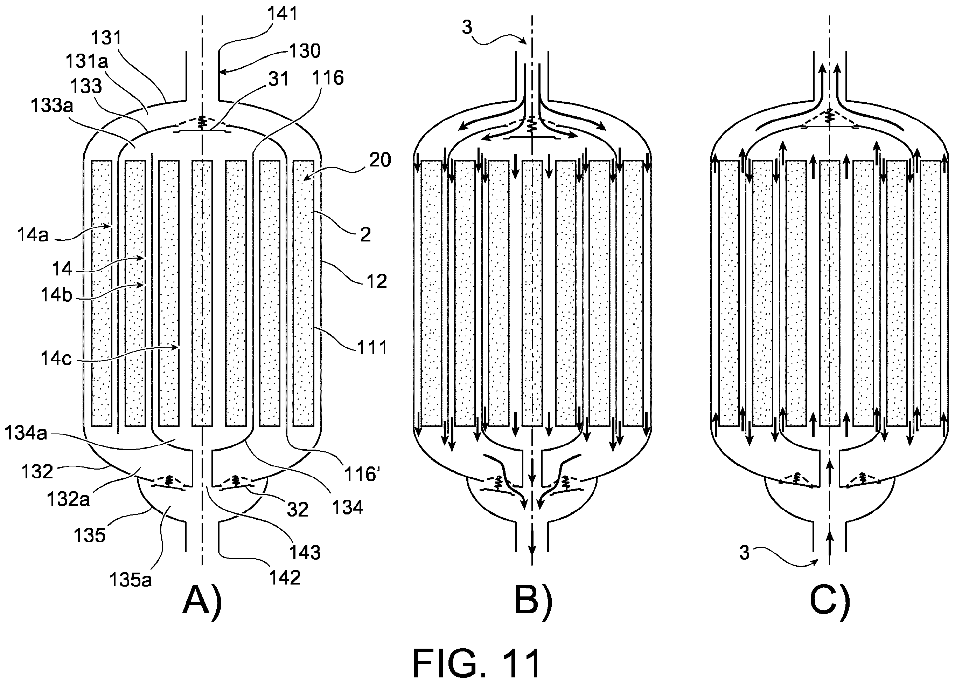

Ainsi, par exemple, soit le MCP est contenu dans la calandre et le fluide caloporteur s'écoule dans des conduits, soit le MCP est contenu dans des capsules (comme illustré figure 11) et le fluide caloporteur s'écoule autour des capsules et est contenu dans la calandre.

La calandre 12 est ici considérée comme cylindrique.

La calandre 12 comporte deux entrées/sorties de fluide par chacune desquelles du fluide entre ou sort du système, aussi désignées ici « bornes » : une borne supérieure 141, comportant ici une tubulure hydraulique principale supérieure, et une borne inférieure 142, comportant ici une tubulure hydraulique principale inférieure.

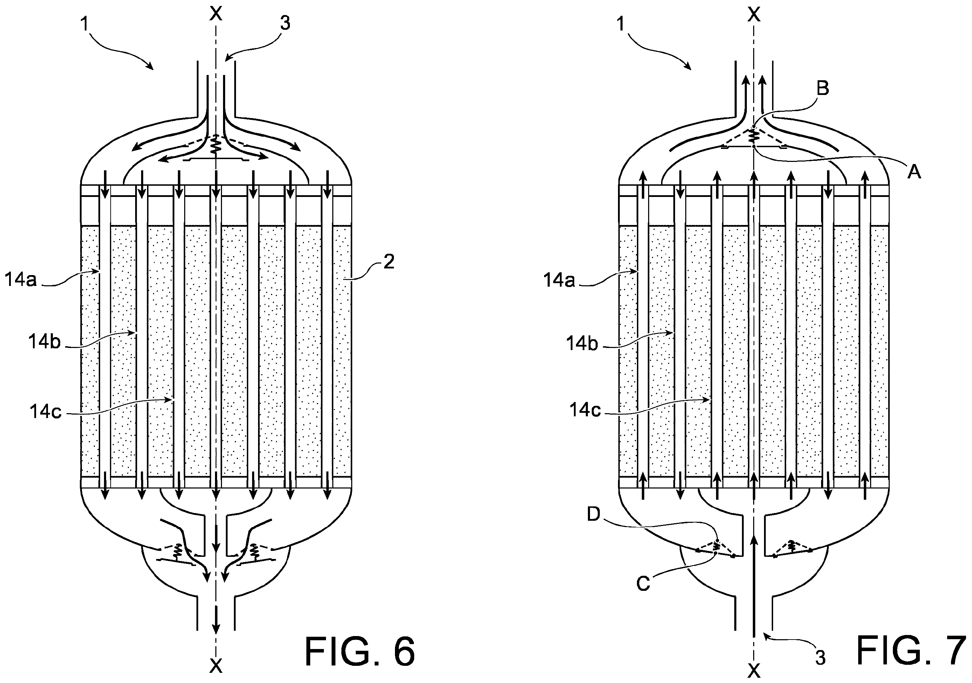

Comme décrit par la suite, la borne supérieure 141 est ainsi configurée pour former une entrée du fluide caloporteur 3 lors d'un écoulement descendant, comme illustré figure 6, tandis que la borne inférieure 142 est ainsi configurée pour former une entrée du fluide caloporteur 3 dans la calandre lors d'un écoulement considéré comme ascendant, comme illustré figure 7.

Les bornes 141, 142 sont ici disposées selon un axe longitudinal X du système, qui est ici un axe longitudinal de la calandre.

Le système de stockage thermique 1 comporte aussi un échangeur thermique 11. L'échangeur thermique 11 est disposé dans la calandre 12.

L'échangeur thermique 11 comporte principalement un faisceau 111 de conduits 14. Le faisceau 111 de conduits 14 désigne ici un ensemble de conduits 14, comportant au moins trois conduits 14a, 14b, 14c.

Dans l'exemple de réalisation des figures 5 à 7, les conduits 14 sont des tubes 114, et comportent donc au moins trois tubes 114a, 114b, 114c.

Les conduits 14 sont ici droits et parallèles les uns aux autres.

Les tubes 114 sont par exemple des tubes à ailettes ; il pourrait néanmoins s'agir de tubes standards, sans ailettes.

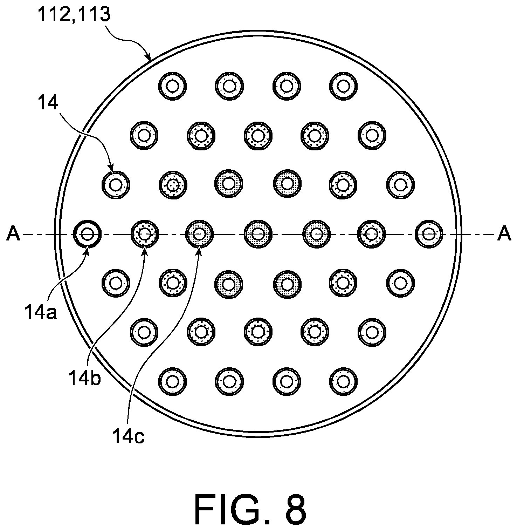

L'échangeur thermique 11 comporte en outre ici une plaque collectrice supérieure 112, et une plaque collectrice inférieure 113, représentée par exemple vue de dessus en figure 8.

Les conduits 14 s'étendent entre la plaque collectrice supérieure 112 et la plaque collectrice inférieure 113.

Chaque conduit 14 est fixé, par exemple soudé, à une première extrémité du conduit, à la plaque collectrice supérieure 112 et, à une seconde extrémité du conduit, à la plaque collectrice inférieure 113.

La plaque collectrice supérieure 112 et la plaque collectrice inférieure 113 sont ici parallèles l'une à l'autre.

La plaque collectrice supérieure 112 et la plaque collectrice inférieure 113 sont disposées dans la calandre selon une section transverse de la calandre, par exemple orthogonales à l'axe longitudinal X.

Chacune de la plaque collectrice supérieure 112 et de la plaque collectrice inférieure 113 obture la section de la calandre qu'elle occupe.

Ainsi, le fluide caloporteur ne peut s'écouler d'une borne 141, 142 à l'autre du système de stockage thermique 1 qu'à travers les conduits 14.

L'échangeur thermique 11 disposé dans la calandre 12 divise ainsi la calandre 12 en trois compartiments :
- un compartiment supérieur 130, aussi désigné « distributeur supérieur » 130 ou « collecteur de fluide supérieur » 130, entre la borne supérieure 141 et le faisceau 111 de conduit 14, ou la plaque collectrice supérieure 112 si une telle plaque est présente,
- un compartiment central formé par le faisceau 111 de conduits 14, entre la plaque collectrice supérieure 112 et la plaque collectrice inférieure 113 le cas échéant, et
- un compartiment inférieur 135, aussi désigné « distributeur inférieur » 135 ou « collecteur de fluide inférieur » 135, entre le faisceau 111 de conduit 14, ou la plaque collectrice inférieure 113 si une telle plaque est présente, et la borne inférieure 142.

Dans le compartiment central, le système de stockage thermique comporte le matériau à changement de phase (MCP) 2.

Le matériau à changement de phase 2 occupe donc un volume défini dans la calandre 12 et entoure donc au moins en partie les conduits 14.

Le matériau à changement de phase (MCP) 2, comme décrit précédemment, est un matériau configuré pour prendre un premier état lorsqu'il est à une température inférieure à une température de changement de phase, et un deuxième état lorsqu'il est à une température supérieure à une température de changement de phase.

Par exemple, le matériau à changement de phase 2 a une température de fusion, et il est à l'état solide lorsqu'il est à une température inférieure à sa température de fusion, et à l'état liquide lorsqu'il est à une température supérieure à sa température de fusion. En conséquence, le matériau à changement de phase 2 peut avoir une première densité lorsqu'il est dans son premier état, et une deuxième densité, possiblement différente de la première densité, lorsqu'il est dans son deuxième état.

Le matériau à changement de phase 2 peut donc occuper un premier volume lorsqu'il est dans son premier état, et un deuxième volume, possiblement différent du premier volume, lorsqu'il est dans son deuxième état.

Par conséquent, il peut être préférable que le matériau à changement de phase 2 n'occupe qu'une partie du volume disponible dans le compartiment central quand il est dans un état de sorte à permettre une éventuelle dilatation lors de son passage d'un état à un autre.

Ainsi, sur la figure 5, le matériau à changement de phase 2 laisse un espace disponible 121 entre sa surface et une extrémité (de préférence une extrémité supérieure, mais qui peut être une extrémité inférieure) des conduits 14, et par exemple ici par rapport à la plaque collectrice supérieure 112.

Le distributeur supérieur 130 comporte une boite de répartition supérieure de fluide 133. Le distributeur supérieur 130 comprend aussi une boite de répartition partielle supérieure 131.

La boite de répartition partielle supérieure 131 est distincte de la boite de répartition supérieure de fluide 133.

Le distributeur supérieur 130 comporte par exemple une paroi qui est mitoyenne à la boite de répartition partielle supérieure 131 et la boite de répartition supérieure de fluide 133. La paroi mitoyenne scinde par exemple un volume du distributeur supérieur 130 en deux sous-volumes 131a, 133a.

La boite de répartition partielle supérieure 131 délimite ainsi un premier des deux sous-volumes 131a et la boite de répartition supérieure de fluide 133 délimite ainsi un deuxième des deux sous-volumes 133a.

La paroi de la boite de répartition supérieure de fluide 133 a ici une forme de cloche chapeautant une première partie du faisceau 111 de conduits 14, ici par-dessus la plaque collectrice supérieure 112.

La boite de répartition supérieure de fluide 133 est ici centrée par rapport au faisceau 111 de conduits 14, et plus particulièrement ici par rapport à la plaque collectrice supérieure 112, et/ou dans le distributeur supérieur 130.

Le distributeur supérieur 130 comporte ainsi le deuxième sous-volume 133a délimité par au moins la paroi mitoyenne et la première partie du faisceau 111 de conduits 14, et le premier sous-volume 131a délimité entre au moins la paroi mitoyenne, une deuxième partie du faisceau 111 de conduits 14, et une partie de la paroi de la calandre 12 définissant le distributeur supérieur 130.

Dans le présent exemple de réalisation, le premier sous-volume 131a entoure, voire englobe, le deuxième sous-volume 133a.

La seconde partie de la plaque collectrice supérieure 112 s'étend donc entre la première partie de la plaque collectrice supérieure 112, chapeautée par la paroi de la boite de répartition supérieure de fluide 133, et la partie de la paroi de la calandre 12.

Ici, la première partie de la plaque collectrice supérieure 112 et la seconde partie de la plaque collectrice supérieure 112 forment l'ensemble de la plaque collectrice supérieure 112.

Une extrémité supérieure de chacun des conduits du faisceau de conduits débouche donc soit dans la boite de répartition supérieure de fluide 133 (i.e. dans le deuxième sous-volume 133a), soit dans la boite de répartition partielle supérieure 131 en dehors de la boite de répartition supérieure de fluide 133 (i.e. dans le premier sous-volume 131a).

Ainsi, du côté de la boite de répartition partielle supérieure 131, un premier conduit 14a des au moins trois conduits 14 débouche dans le premier sous-volume 131a, tandis qu'au moins un deuxième conduit 14b et un troisième conduit 14c des au moins trois conduits 14 débouchent dans le deuxième sous-volume 133a.

En outre, la boite de répartition supérieure de fluide 133 comporte un dispositif de clapet hydraulique supérieur 31, par exemple disposé dans la paroi de la boite de répartition supérieure de fluide 133.

Le dispositif de clapet hydraulique supérieur 31 est ici configuré pour permettre un passage de fluide caloporteur 3 depuis le premier sous-volume 131a vers le deuxième sous-volume 133a.

Ainsi, le dispositif de clapet hydraulique supérieur 31 est configuré pour permettre un écoulement de fluide caloporteur 3 depuis la borne supérieure 141 vers l'ensemble des conduits 14, en favorisant une répartition la plus homogène possible du fluide caloporteur 3 dans tous les conduits 14.

Le dispositif de clapet hydraulique supérieur 31 est en outre ici centré par rapport à la paroi de la boite de répartition supérieure de fluide 133.

Autrement dit, il est ici centré par rapport à l'axe longitudinal X de sorte à se trouver à l'aplomb de la borne supérieure 141.

Ainsi, un écoulement de fluide provenant de la borne supérieure 141 arrive sur le dispositif de clapet hydraulique supérieur 31, favorisant son ouverture, et donc facilitant une répartition de l'écoulement de fluide entre le premier sous-volume 131a et le deuxième sous-volume 133a.

Le dispositif de clapet hydraulique supérieur 31 comporte par exemple un clapet anti retour.

Dans le présent exemple de réalisation, le dispositif de clapet hydraulique supérieur 31 comporte un seul clapet, qui comporte un volet et au moins un système de ressort afin de favoriser un retour du volet en position fermée et clore la paroi dans laquelle le dispositif de clapet hydraulique supérieur 31 est disposé.

L'au moins un ressort comporte par exemple un ressort hélicoïdal, et/ou un ressort plat, et/ou une lame-ressort.

En position fermée, le dispositif de clapet hydraulique supérieur 31 ferme, d'une manière la plus étanche possible au fluide caloporteur 3 circulant dans le système de stockage thermique 1, la boite de répartition supérieure de fluide 133.

Pour favoriser l'étanchéité, la boite de répartition supérieure de fluide 133 peut être pourvue d'un siège sur lequel le volet vient reposer lorsqu'il est en position fermée.

Comme illustré figure 7, en écoulement ascendant, i.e. entrant par la borne inférieure, le dispositif de clapet hydraulique supérieur 31 reste fermé car l'écart de pression de part et d'autre du volet crée une force qui a pour effet de plaquer le volet sur son siège.

Comme illustré figure 6, en écoulement descendant, i.e. entrant par la borne supérieure, l'effet de jet arrivant sur le dispositif de clapet hydraulique supérieur 31 induit son ouverture.

Dans le distributeur inférieur 135, entre le faisceau 111 de conduits 14 et la borne inférieure 142, en l'occurrence entre la plaque collectrice inférieure 113 et la borne inférieure 142, le système de stockage thermique 1 comporte une boite de répartition inférieure de fluide 132, et une boite de répartition partielle inférieure de fluide 134.

Un volume du distributeur inférieur 135 est ici divisé en trois sous-volumes 135a, 132a, 134a.

Un premier sous-volume 134a des trois sous-volumes est ainsi globalement délimité entre une première partie du faisceau 111 de conduits 14 (de la plaque collectrice inférieure 113) et une paroi de la boite de répartition partielle inférieure de fluide 134.

Un deuxième sous-volume 132a des trois sous-volumes est ainsi globalement délimité entre une deuxième partie du faisceau 111 de conduits 14 (de la plaque collectrice inférieure 113), et une paroi de la boite de répartition inférieure de fluide 132.

Un troisième sous-volume 135a des trois sous-volumes est ainsi globalement délimité entre la paroi de la boite de répartition inférieure de fluide 132 et la borne inférieure 142. La paroi de la boite de répartition partielle inférieure de fluide 134 a ici une forme de cloche chapeautant la première partie de la plaque collectrice inférieure 113.

La boite de répartition partielle inférieure de fluide 134 est ici centrée par rapport au faisceau 111 de conduits 14 (à la plaque collectrice inférieure 113), et/ou dans le distributeur inférieur 135.

En outre, au moins le troisième conduit 14c débouche, du côté du distributeur inférieur 135, dans la boite de répartition partielle inférieure de fluide 134, i.e. dans le premier sous-volume 134a, tandis qu'au moins le premier conduit 14a et le deuxième conduit 14b débouchent en dehors de la boite de répartition partielle inférieure de fluide 134, i.e. hors du premier sous-volume 134a.

En particulier, le premier conduit 14a et le deuxième conduit 14b débouchent dans la boite de répartition inférieure de fluide 132, i.e. dans le deuxième sous-volume 132a.

Le distributeur inférieur 135 comporte une tubulure hydraulique partielle inférieure 143 qui communique d'une part dans le premier sous-volume 134a et d'autre part dans le troisième sous-volume 135a.

La tubulure hydraulique partielle inférieure 143 permet ainsi un écoulement du fluide caloporteur 3 entre au moins le troisième conduit 14c et la borne inférieure 142.

La paroi de la boite de répartition inférieure de fluide 132 a aussi une forme de cloche, chapeautant ici le faisceau 111 de conduits 14, en l'occurrence toute la plaque collectrice inférieure 113. En outre, elle englobe ici la boite de répartition partielle inférieure de fluide 134.

La boite de répartition inférieure de fluide 132 est ici centrée par rapport au faisceau 111 de conduits 14 (par rapport à la plaque collectrice inférieure 113), et/ou dans le distributeur inférieur 135.

La seconde partie du faisceau 111 de conduits 14 (de la plaque collectrice inférieure 113) s'étend donc entre la première partie du faisceau 111 de conduits 14 (de la plaque collectrice inférieure 113) chapeautée par la paroi de la boite de répartition partielle inférieure de fluide 134 et la paroi de la boite de répartition inférieure de fluide 132.

Ici, la première partie du faisceau 111 de conduits 14 (de la plaque collectrice inférieure 113) et la seconde partie du faisceau 111 de conduits 14 (de la plaque collectrice inférieure 113) forment l'ensemble du faisceau 111 de conduits 14 (de la plaque collectrice inférieure 113).

Dans le présent exemple de réalisation, le deuxième sous-volume 132a entoure, voire englobe, le premier sous-volume 134a.

Dans le présent exemple de réalisation, une partie de la paroi de la boite de répartition inférieure de fluide 132 forme une partie de la paroi du distributeur inférieur 135, soit ici une partie de la paroi de la calandre 12.

En outre, la boite de répartition inférieure de fluide 132 comporte un dispositif de clapet hydraulique inférieur 32, par exemple disposé dans la paroi de la boite de répartition inférieure de fluide 132.

Le dispositif de clapet hydraulique inférieur 32 est ici configuré pour permettre un passage de fluide caloporteur 3 depuis le deuxième sous-volume 132a vers le troisième sous-volume 135a.

Ainsi, le dispositif de clapet hydraulique inférieur 32 est configuré pour permettre un écoulement de fluide caloporteur 3 depuis au moins le premier conduit 14a et le deuxième conduit 14b, vers la borne inférieure 142.

Le dispositif de clapet hydraulique inférieur 32 est en outre ici centré par rapport à la paroi de la boite de répartition inférieure de fluide 132.

Autrement dit, il est ici centré par rapport à l'axe longitudinal X et se trouve à l'aplomb de la borne inférieure 142.

Ainsi, un écoulement de fluide provenant du deuxième sous-volume 132a converge vers la borne inférieure 142.

Le dispositif de clapet hydraulique inférieur 32 comporte par exemple un clapet annulaire.

Dans le présent exemple de réalisation, le dispositif de clapet hydraulique inférieur 32 comporte un seul clapet annulaire qui entoure la tubulure hydraulique partielle inférieure 143.

Par exemple, le clapet annulaire comporte un volet annulaire et au moins un système de ressort afin de favoriser un retour du volet annulaire en position fermée.

L'au moins un ressort comporte par exemple un ressort hélicoïdal, et/ou un ressort plat, et/ou une lame-ressort.

En l'absence d'écoulement, le dispositif de clapet hydraulique inférieur 32 est de préférence fermé.

En position fermée, le dispositif de clapet hydraulique inférieur 32 ferme la boite de répartition inférieure de fluide 132, d'une manière la plus étanche possible au fluide caloporteur 3 circulant dans le système de stockage thermique 1.

Pour favoriser l'étanchéité, la boite de répartition inférieure de fluide 132 peut être pourvue d'un siège sur lequel le volet annulaire vient reposer lorsqu'il est en position fermée.

Comme illustré figure 7, en écoulement ascendant, i.e. entrant depuis la borne inférieure, le dispositif de clapet hydraulique inférieur 32 reste fermé car l'écart de pression de part et d'autre du volet crée une force qui a pour effet de plaquer le volet.

Selon une option intéressante non représentée, le système de stockage thermique 1 peut comporter un déflecteur pour orienter le jet arrivant de la borne inférieure 142 et générer un effet de jet qui maintient le dispositif de clapet hydraulique inférieur 32 fermé en appuyant dessus, par exemple sur son volet. Une fois le dispositif de clapet hydraulique inférieur 32 fermé, la force due à l'écart de pression s'exerce dans le bon sens pour qu'il reste fermé.

Comme illustré figure 6, en écoulement descendant, i.e. entrant par la borne supérieure, l'effet de jet arrivant depuis la borne supérieure 141 sur le dispositif de clapet hydraulique inférieur 32 induit son ouverture.

De plus, la boite de répartition inférieure de fluide 132 comporte par exemple une ouverture centrale formant la tubulure hydraulique partielle inférieure 143 de sorte à laisser un écoulement libre entre le premier sous-volume 134a et le troisième sous-volume 135a.

En fonctionnement, une variation de masse volumique du matériau à changement de phase 2 entre les deux états qu'il peut prendre, par exemple entre son état solide et son état liquide, peut impliquer de respecter certaines précautions lors de la charge et lors de la décharge du système de stockage thermique 1.

Dans le cas d'un matériau à changement de phase possédant une masse volumique plus élevée à l'état solide qu'à l'état liquide, et d'un stockage de chaleur basé sur le changement de phase liquide-solide, il est donc préférable d'effectuer une charge en commençant par le haut du système (écoulement descendant) de sorte à établir un gradient de température négatif dans le sens vertical descendant.

Ce mode opératoire permet d'éviter la formation de poches/volumes de matériau à changement de phase à l'état liquide à l'intérieur d'un volume de matériau à changement de phase à l'état solide et compact, ce qui entrainerait des contraintes thermomécaniques importantes sur la structure du système de stockage thermique 1, susceptibles d'entrainer des déformations plastiques (dégradations) voire son endommagement (rupture mécanique de l'échangeur thermique et/ou de la calandre).

En charge, une contrainte importante est donc généralement d'établir un gradient de température négatif dans le sens vertical descendant, afin que la dilatation du matériau à changement de phase au cours de la fusion puisse être compensée par un ciel de gaz. Sous ces hypothèses, le sens d'écoulement du fluide caloporteur est donc généralement forcé du haut vers le bas de l'échangeur thermique.

Dans cette configuration, l'ensemble des dispositifs de clapet hydraulique 31, 32 de l'échangeur thermique sont ouverts pour laisser passer un débit partiel de fluide caloporteur 3.

L'ouverture des dispositifs de clapet hydraulique 31, 32 s'effectue de manière passive, actionnée par la différence de pression du fluide caloporteur 3 de part et d'autre des dispositifs de clapet hydraulique 31, 32, comme décrit ci-dessus.

Comme l'illustre la figure 6, l'écoulement hydraulique du fluide caloporteur 3 s'effectue alors en mono passe à travers tous les conduits 14 du système de stockage thermique 1 lors d'un écoulement descendant.

L'agencement du dispositif de clapet hydraulique supérieur 31 et du dispositif de clapet hydraulique supérieur 32 est tel qu'ils sont alors ouverts par l'écoulement descendant de fluide 3.

Compte tenu de la répartition et de la division du débit d'alimentation du fluide caloporteur 3 à l'entrée du système de stockage thermique 1 (i.e. à la borne supérieure 141 dans ce cas), le faible débit partiel traversant chaque conduit 14 engendre une faible vitesse d'écoulement et par conséquent un faible coefficient d'échange convectif du fluide caloporteur 3, comparé à la configuration hydraulique obtenue grâce à ce système de stockage thermique 1 lors d'un écoulement ascendant , comme décrit ci-dessous.

Comme l'illustre la figure 7, le sens d'écoulement du fluide est forcé du bas vers le haut (écoulement ascendant) et la vitesse du fluide caloporteur 3 dans les conduits 14 est augmentée pour obtenir plus de puissance.

Dans cette configuration d'écoulement ascendant, les dispositifs de clapet hydraulique supérieur 31 et inférieur 32 sont fermés par l'écoulement, conditionnant le cheminement hydraulique parcouru par le fluide caloporteur 3 à travers des passes de l'échangeur thermique.

En effet, en raison des pertes de charge dans l'écoulement, la pression au point B au-dessus du dispositif de clapet hydraulique 31 est inférieure à la pression au point A en-dessous du dispositif de clapet hydraulique 31 (de même, la pression au point D au-dessus du dispositif de clapet hydraulique 32 est inférieure à la pression au point C en-dessous du dispositif de clapet hydraulique 32).

En position fermée, les dispositifs de clapet hydraulique 31, 32 ne permettent donc pas le passage d'un débit de fluide caloporteur 3 à travers un orifice qu'ils obstruent (siège du clapet par exemple), c'est-à-dire à travers la boite de répartition supérieure de fluide 133 et la boite de répartition inférieure de fluide 132 correspondantes.

La fermeture des dispositifs de clapet hydraulique 31, 32 s'effectue de manière passive, par l'effort exercé par la différence de pression du fluide caloporteur 3 de part et d'autres des dispositifs de clapet hydraulique 31, 32, et éventuellement par l'action d'un ressort de rappel optionnel pouvant équiper avantageusement chaque dispositif de clapet hydraulique 31, 32.

L'écoulement hydraulique du fluide caloporteur 3 s'effectue alors en multi-passes (3 passes sur la figure 7) à travers l'échangeur thermique du système de stockage thermique 1.

Dans cette configuration, le fluide caloporteur 3 entrant dans le système de stockage thermique 1 par la borne inférieure 142, s'écoule dans le troisième conduit 14c par flux ascendant, puis dans le deuxième conduit 14b par flux descendant, puis dans le premier conduit 14a par flux ascendant, puis peut sortir du système de stockage thermique 1 par la borne supérieure 141 après avoir parcouru le premier sous-volume 131a.

L'écoulement hydraulique du fluide caloporteur 3 s'effectue verticalement à la fois dans le sens ascendant (première et troisième passe) et à la fois dans le sens descendant (deuxième passe) suivant l'orientation de la passe de conduits (en parallèle) traversée par le fluide caloporteur 3.

Compte tenu du nombre réduit de conduits 14 traversés lors de chaque passe par le fluide caloporteur 3, le débit partiel du fluide par conduit est plus élevé que si l'ensemble des conduits 14 étaient parcourus ensemble en parallèle.

Un débit partiel élevé traversant chaque conduit peut alors provoquer une vitesse d'écoulement plus élevée et par conséquent un coefficient d'échange convectif plus élevé du fluide caloporteur, comparé à la configuration hydraulique du système de stockage thermique 1 en écoulement descendant.

La figure 8 illustre le faisceau 111 de conduit 14 vu de dessus selon un exemple de réalisation, par exemple selon l'exemple de réalisation de la figure 7, dans laquelle les conduits seraient représentés selon la coupe A-A indiquée figure 8.

Dans cet exemple de réalisation, le faisceau de conduit comporte trente-sept conduits 14.

Ici, les conduits 14 sont disposés en couronnes concentriques.

Une première couronne comportant le premier conduit 14a est une couronne extérieure comportant dix-huit conduits.

Une deuxième couronne, comportant le deuxième conduit 14b, est inscrite dans la première couronne et comporte douze conduits 14.

Une troisième couronne, comportant le troisième conduit 14c, est inscrite dans la deuxième couronne et comporte six conduits 14.

Enfin, le faisceau de conduits comporte ici un conduit central, entouré par la troisième couronne.

En flux ascendant, le fluide caloporteur 3 entrant dans le système de stockage thermique 1 par la borne inférieure 142, s'écoule dans la troisième couronne et le conduit central par flux ascendant, par exemple à une vitesse normalisée de 1 m/s. Puis, il s'écoule alors dans la deuxième couronne par flux descendant à une vitesse normalisée comprise entre environ 0,3 m/s et 0,9 m/s par exemple, puis dans la première couronne par flux ascendant, à une vitesse normalisée comprise entre environ 0,2 m/s et 0,6 m/s par exemple.

Une simulation de l'échange thermique en écoulement ascendant (ici décharge) a été réalisée en utilisant une simulation 1D avec les hypothèses suivantes :
- Température initiale du stockage MCP : 65°C
- Circulation du fluide caloporteur dans trente-sept tubes verticaux de 1.3 m
- Température du fluide caloporteur à l'entrée du stockage : 2°C
- Puissance de décharge attendue : 23 kW
- Débit du fluide caloporteur évoluant au cours du temps afin de réaliser une décharge à puissance constante

En configuration mono-passe, la durée pendant laquelle il est possible de fournir la puissance attendue est de 29 min.

En configuration avec trois passes en passant de 7 tubes à 12 tubes puis à 18 tubes, la durée pendant laquelle il est possible de fournir la puissance attendue est de 34 min, soit une durée allongée de 15% environ.

Bien entendu, comme mentionné précédemment, en considérant un MCP ayant une densité à l'état solide plus faible qu'à l'état liquide, il est préférable que les écoulements en charge et décharge soient inversés, i.e. soit par exemple ascendant en décharge. De ce fait, la disposition des collecteurs/distributeurs et des clapets décrits ici seraient inversés, de sorte que l'écoulement ascendant (entrant par la borne inférieure) soit mono-passe, et l'écoulement descendant (entrant par la borne supérieure) soit multi-passes.

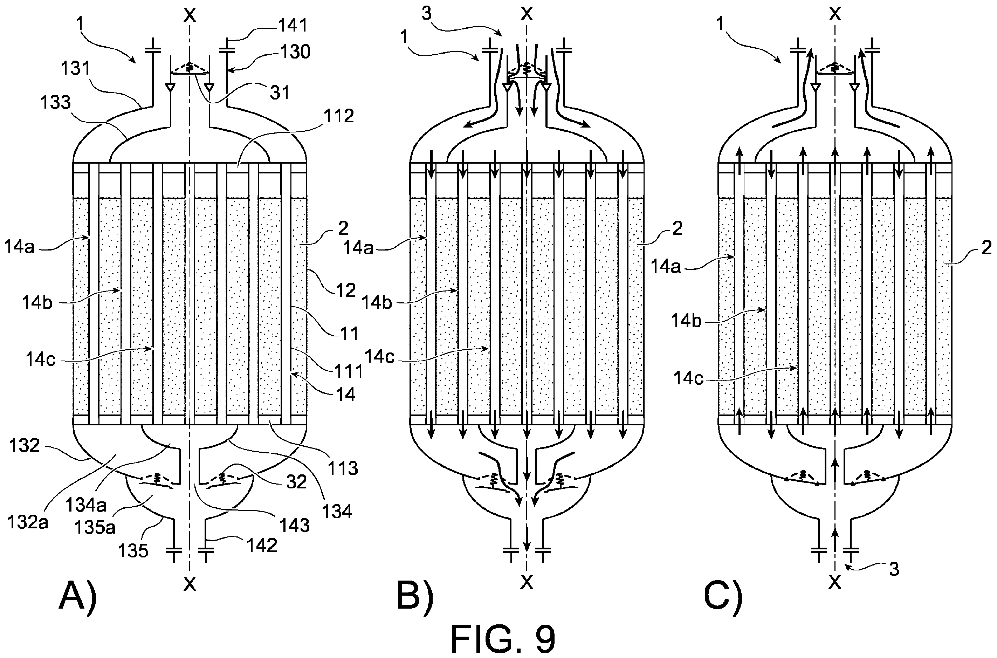

La figure 9 représente un deuxième exemple de réalisation d'un système de stockage thermique 1, dans lequel des dispositifs du système de stockage thermique 1 sont accessibles et démontables depuis l'extérieur du système de stockage thermique 1.

Ce mode de réalisation diffère de celui des figures 5 à 7 notamment de par la boite de répartition supérieure de fluide 133.

Dans ce mode de réalisation, la boite de répartition supérieure de fluide 133 comporte une tubulure à une extrémité de laquelle le dispositif de clapet hydraulique supérieur 31 est déporté.

Le dispositif de clapet hydraulique supérieur 31 est ainsi accessible via la borne supérieure 141.

Si nécessaire, la borne supérieure 141 et/ou la borne inférieure 142 peuvent aussi être démontables pour faciliter un accès dans le système de stockage thermique 1 afin d'en faciliter une maintenance ou une réparation.

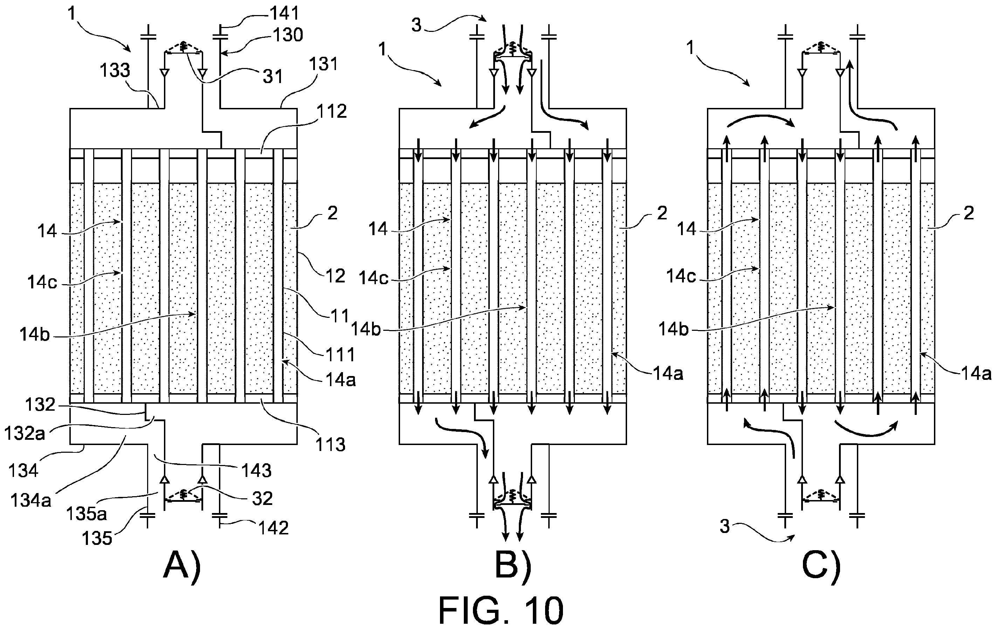

La figure 10 représente un troisième exemple de réalisation d'un système de stockage thermique 1, dans lequel les conduits 14 sont formés par des plaques parallèles.

Ce mode de réalisation diffère en outre de celui des figures 5 à 9 de par la forme de la calandre. En effet, la disposition de plaques pour former les conduits implique une réalisation plus aisée de la calandre 12 selon une forme globalement parallélépipédique plutôt que cylindrique.

En outre, la boite de répartition supérieure de fluide 133 est ici délimitée dans le distributeur supérieur 130 par au moins une paroi verticale, la paroi « mitoyenne ».

Ainsi, le premier sous-volumes 131a est situé d'un côté de la paroi verticale et le deuxième sous-volume 133a est situé de l'autre côté de la paroi verticale.

La boite de répartition supérieure de fluide 133 est ici disposée d'un côté dans la calandre sans être nécessairement centrée.

Il en va de manière analogue pour la boite de répartition inférieure de fluide 132.

Dans le présent exemple de réalisation, le premier sous-volume 134a est juxtaposé au deuxième sous-volume 132a.

La boite de répartition inférieure de fluide 132 est ici disposée d'un côté de la calandre sans être nécessairement centrée.

La figure 11 représente un quatrième exemple de réalisation d'un système de stockage thermique 1, dans lequel le MCP 2 est encapsulé, des conduits 14 étant délimités par au moins une capsule 20, voire formés entre deux capsules 20 de MCP.

Ce mode de réalisation diffère en outre de celui des figures 5 à 8 en ce que le système de stockage thermique 1 comporte en outre au moins une cloison 116, 116' délimitant au moins une partie d'un des conduits 14.

En l'occurrence, une cloison 116, 116' est ici disposée entre deux capsules 20.

Ainsi, la cloison 116, 116' et une première capsule 20 définissent un conduit d'un premier côté de la cloison 116, 116', et la même cloison 116, 116' et une deuxième capsule 20, adjacente à la première capsule 20, définissent un autre conduit d'un deuxième côté de ladite cloison 116,116'.

Le système de stockage thermique 1 est ainsi configuré pour que l'écoulement de fluide 3 contourne la cloison 116, 116' lors d'un écoulement de fluide caloporteur 3 entrant par la borne inférieure 142.

La cloison 116, 116' définit ainsi une chicane hydraulique.

Dans le présent exemple de réalisation, une première cloison 116 prolonge une paroi de la boite de répartition partielle inférieure de fluide 134 entre deux capsules 20, et une deuxième cloison 116' prolonge une paroi de la boite de répartition supérieure de fluide 133 entre deux autres capsules 20.

Lors d'un écoulement entrant par la borne supérieure illustré sur la figure 11 B), la présence de cloisons 116, 116' n'a pas (ou peu) d'incidence sur l'écoulement, et le fluide 3 s'écoule dans tous les conduits 14, comme dans les autres modes de réalisation décrits précédemment.

Lors d'un écoulement entrant par la borne inférieure illustré sur la figure 11 C), le fluide caloporteur 3 s'écoule dans le troisième conduit 14c par flux ascendant, puis dans le deuxième conduit 14b par flux descendant, puis dans le premier conduit 14a par flux ascendant, puis peut sortir du système de stockage thermique 1 par la borne supérieure 141 après avoir parcouru le premier sous-volume 131a, comme dans les modes de réalisations précédemment décrits.

Or, il est à noter ici que le troisième conduit 14c peut être un conduit défini d'un premier côté de la première cloison 116, tandis que le deuxième conduit 14b peut être un conduit défini d'un deuxième côté de la première cloison 116, et/ou un conduit défini d'un premier côté de la deuxième cloison 116', tandis que le premier conduit 14a peut être un conduit défini d'un deuxième côté de la deuxième cloison 116'.

Une telle cloison 116, 116' peut néanmoins être ajoutée dans au moins un des modes de réalisation décrit précédemment.

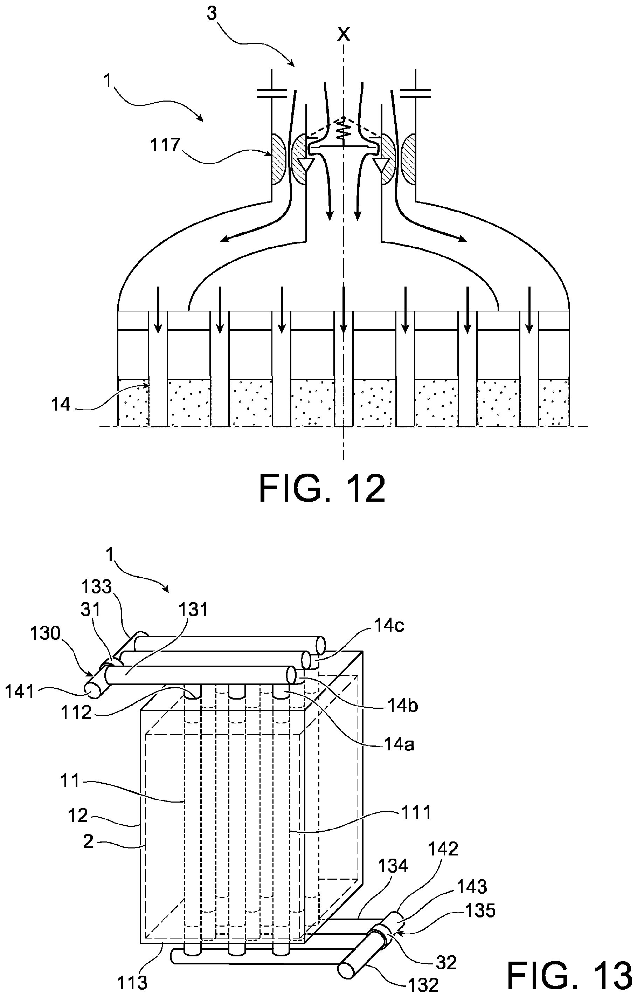

La figure 12 illustre une autre option applicable à l'un quelconque des modes de réalisation décrits précédemment ou en lien avec les figures 13 à 15.

Selon cette option, le système de stockage thermique 1 peut comporter des éléments de constriction/réduction du débit 117, configurés pour augmenter des pertes de charges, et donc réduire le débit.

Dans l'exemple de réalisation de la figure 12, le système de stockage thermique 1 comporte un élément de constriction 117 disposé dans la tubulure hydraulique supérieure de la borne 141.

L'élément de constriction 117 est par exemple ici un élément rapporté, mais il pourrait également être formé par une déformation de section de la tubulure par exemple.

Dans un exemple de réalisation non illustré, un tel élément de constriction 117 pourrait également être disposé dans la tubulure hydraulique inférieure de la borne inférieure 142, qu'un tel élément de constriction 117 soit présent ou non dans la tubulure hydraulique supérieure de la borne supérieure 141. Ceci est notamment intéressant lorsque, comme mentionné précédemment, le MCP utilisé a une densité à l'état solide plus faible qu'à l'état liquide, de sorte qu'il est alors préférable que les écoulements en charge et décharge soient inversés par rapport à ceux détaillés ici.

L'invention permet ainsi de définir deux configurations d'écoulement différenciées du fluide caloporteur dans le faisceau de conduits, selon l'entrée du fluide caloporteur 3.

Dans la configuration de décharge du système de stockage thermique (i.e. en restitution de la chaleur), l'écoulement du fluide 3 à travers le faisceau de conduits se fait en multi-passes, ce qui permet d'augmenter la vitesse du fluide dans les conduits, et donc le coefficient d'échange thermique convectif du fluide caloporteur 3 en paroi de conduit. En conséquence, la puissance thermique échangée entre le fluide caloporteur 3 et le matériau à changement de phase 2 est relativement plus élevée.

Dans la configuration de charge du système de stockage thermique (i.e. en accumulation de la chaleur), l'écoulement du fluide 3 à travers le faisceau de conduits se fait en mono-passe. Cela permet (si nécessaire) d'assurer un gradient de température dans le sens vertical dans l'ensemble des conduits, et donc de limiter des risques de création de poches de matériau à changement de phase liquide à l'intérieur d'un volume solide (susceptible d'entrainer des dégradations ou même la destruction du système de stockage thermique 1).

Dans cette configuration également, la vitesse fluide dans les tubes est plus faible que dans la configuration multi-passes, ce qui induit un coefficient d'échange thermique réduit, et donc une puissance échangée plus faible.

Enfin, la figure 13 présente encore un autre exemple de réalisation de l'invention, dans lequel la distribution et la collecte hydrauliques sont assurées par des « nourrices ».

En effet, dans cet exemple, le distributeur supérieur 130 comporte des nourrices de distribution formées d'une pluralité de canalisations.

Par exemple, le distributeur supérieur 130 comporte une canalisation principale.

La canalisation principale comporte une extrémité libre formant la borne supérieure 141 et le clapet hydraulique supérieur 31 disposé à distance non nulle de la borne supérieure, et la canalisation principale comporte aussi une partie telle que le clapet hydraulique supérieur 31 est disposé entre la borne supérieure 141 et cette partie de la canalisation principale.

La boite de répartition supérieure de fluide 133 est ici formée par cette partie de la canalisation principale, ainsi que par au moins deux canalisations secondaires (il pourrait y en avoir plus que deux bien que seulement deux soient illustrées) qui s'étendent depuis cette partie de la canalisation principale.

Dans cet exemple de réalisation, les canalisations secondaires sont parallèles entre elles.

Chacune des au moins deux canalisations secondaires communique avec au moins un conduit 14.

En l'occurrence, une première des au moins deux canalisations secondaires de la boite de répartition supérieure de fluide 133 communique avec au moins le troisième conduit 14c et une deuxième des au moins deux canalisations secondaires de la boite de répartition supérieure de fluide 133 communique avec au moins le deuxième conduit 14b.

La boite de répartition partielle supérieure 131 est ici formée par une autre canalisation secondaire qui s'étend depuis une autre partie de la canalisation principale du distributeur supérieur 130, qui est celle définie entre la borne supérieure 141 et le clapet hydraulique supérieur 31. Cette autre canalisation secondaire communique ici avec le premier conduit 14a.

Le distributeur supérieur 130 forme ici une collecte principale supérieure pouvant être démontable en parties pour accéder au dispositif de clapet hydraulique supérieur 31.

De manière analogue, le distributeur inférieur 135 comporte des nourrices de distribution formées d'une pluralité de canalisations. Par exemple, le distributeur inférieur 135 comporte une canalisation principale. La canalisation principale comporte une extrémité libre formant la borne inférieure 142 et le clapet hydraulique inférieur 32 disposé à distance non nulle de la borne inférieure 142, et la canalisation principale du distributeur inférieur 135 comporte aussi une partie telle que le clapet hydraulique inférieur 32 est disposé entre la borne inférieure 142 et cette partie de la canalisation principale. La boite de répartition inférieure de fluide 132 est ici formée par cette partie de la canalisation principale du distributeur inférieur 135, ainsi que par au moins deux canalisations secondaires (il pourrait y en avoir plus que deux bien que seulement deux soient illustrées) qui s'étendent depuis cette partie de la canalisation principale du distributeur inférieur 135.

Dans cet exemple de réalisation, les canalisations secondaires sont parallèles entre elles.

Chacune des au moins deux canalisations secondaires de la boite de répartition inférieure de fluide 132 communique avec au moins un conduit 14. En l'occurrence, une première des au moins deux canalisations secondaires de la boite de répartition inférieure de fluide 132 communique avec au moins le premier conduit 14a et une deuxième des au moins deux canalisations secondaires de la boite de répartition inférieure de fluide 132 communique avec au moins le deuxième conduit 14b.

La boite de répartition partielle inférieure 134 est ici formée par une autre canalisation secondaire qui s'étend depuis une autre partie de la canalisation principale du distributeur inférieur 135, qui est celle définie entre la borne inférieure 142 et le clapet hydraulique inférieur 32. Cette autre canalisation secondaire communique ici avec le troisième conduit 14c.

De même, le distributeur inférieur 135 forme ici une collecte principale inférieure pouvant être démontable en parties pour accéder au dispositif de clapet hydraulique inférieur 32.

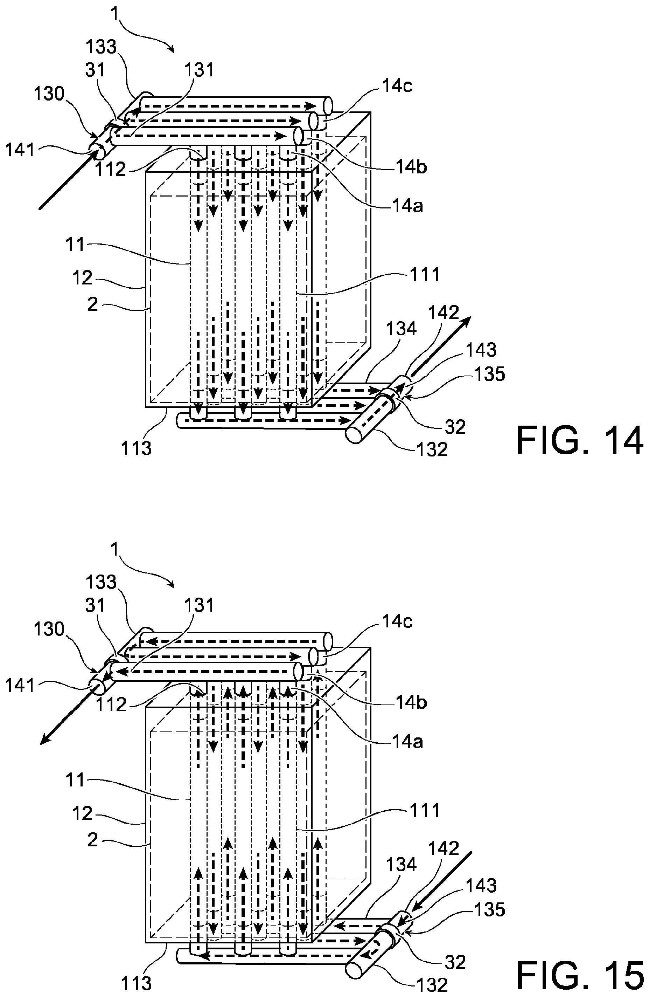

La figure 14 illustre un écoulement descendant ; le fluide entrant dans le système par la borne supérieure 141.

Dans la configuration de la figure 14, le dispositif de clapet hydraulique supérieur 31 et le dispositif de clapet hydraulique inférieur 32 sont passant (ouverts), laissant le fluide caloporteur les traverser. Le fluide caloporteur entre par le distributeur supérieur 130 (i.e. la nourrice principale supérieure) et est distribué dans les différentes canalisations secondaires (nourrices secondaires supérieures). Le fluide caloporteur traverse tous les conduits 14 et sort via les canalisations secondaires du distributeur inférieur 135, puis est ensuite collecté par la canalisation principale du distributeur inférieur 135 avant de sortir du système de stockage thermique 1 par la borne inférieure 142.

La figure 15 illustre un écoulement ascendant ; le fluide entrant dans le système par la borne inférieure 142.

Dans la configuration de la figure 15, le dispositif de clapet hydraulique supérieur 31 et le dispositif de clapet hydraulique inférieur 32 sont bloquant (fermés), empêchant le fluide caloporteur de les traverser. Le fluide caloporteur entre par la canalisation principale du distributeur inférieur 135 et est distribué dans la canalisation de la boite de répartition partielle inférieure 134 seulement, compte tenu de la position fermée du dispositif de clapet hydraulique inférieur 32 dans cette configuration de l'écoulement. Après avoir remonté le troisième conduit 14c, bloqué par le dispositif de clapet hydraulique supérieur 31 en position fermée, le fluide caloporteur collecté par la première des au moins deux canalisations secondaires de la boite de répartition supérieure de fluide 133 est ensuite distribué par la deuxième des au moins deux canalisations secondaires de la boite de répartition supérieure de fluide 133. Le fluide caloporteur redescend par le deuxième conduit 14b et est ensuite collecté par la deuxième des au moins deux canalisations secondaires de la boite de répartition inférieure de fluide 132, passe derrière le dispositif de clapet hydraulique inférieur 32 qui est en position fermée puis alimente la première des au moins deux canalisations secondaires de la boite de répartition inférieure de fluide 132 et remonte par le premier conduit 14a. Arrivant dans la canalisation de la boite de répartition partielle supérieure 131, au-delà du dispositif de clapet hydraulique supérieur 31 en position fermée, le fluide ressort du système de stockage thermique 1 par la borne supérieure 141.

Bien entendu, comme précédemment, en considérant un MCP ayant une densité à l'état solide plus faible qu'à l'état liquide, les écoulements en charge et décharge peuvent être inversés par rapport à ceux décrits ici. De ce fait, la disposition des collecteurs/distributeurs et des clapets décrits ici seraient inversés également, de sorte qu'un écoulement ascendant (entrant par la borne inférieure) soit mono-passe, et un écoulement descendant (entrant par la borne supérieure) soit multi-passes.

## Revendications

1. Système de stockage thermique (1) mettant en oeuvre un matériau à changement de phase (2), le système de stockage thermique (1) comportant le matériau à changement de phase (2), et un échangeur thermique (11) comportant une borne supérieure (141) et une borne inférieure (142) configurées pour former une entrée ou une sortie d'un fluide caloporteur (3) dans le système de stockage thermique (1),
l'échangeur thermique (11) comportant un faisceau (111) de conduits (14) s'étendant entre la borne supérieure (141) et la borne inférieure (142), le faisceau (111) de conduits (14) comportant au moins trois conduits incluant un premier conduit (14a), un deuxième conduit (14b) et un troisième conduit (14c), chacun des conduits (14) étant configuré pour recevoir un écoulement du fluide caloporteur (3), au moins une partie de chacun des conduits (14) étant en contact avec le matériau à changement de phase (2),
le système de stockage thermique (1) comportant un distributeur supérieur (130) s'étendant entre la borne supérieure (141) et le faisceau (111) de conduits (14), et un distributeur inférieur (135) s'étendant entre le faisceau (111) de conduits (14) et la borne inférieure (142),
**caractérisé en ce que** le distributeur supérieur (130) comporte une boite de répartition partielle supérieure (131) et une boite de répartition supérieure de fluide (133), et le distributeur inférieur (135) comporte une boite de répartition partielle inférieure de fluide (134) et une boite de répartition inférieure de fluide (132),
au moins le premier conduit (14a) débouche d'une part dans la boite de répartition partielle supérieure (131) en dehors de la boite de répartition supérieure de fluide (133) et d'autre part dans la boite de répartition inférieure de fluide (132) en dehors de la boite de répartition partielle inférieure de fluide (134), au moins le deuxième conduit (14b) débouche d'une part dans la boite de répartition supérieure de fluide (133) et d'autre part dans la boite de répartition inférieure de fluide (132) en dehors de la boite de répartition partielle inférieure de fluide (134), et au moins le troisième conduit (14c) débouche d'une part dans la boite de répartition supérieure de fluide (133) et d'autre part dans la boite de répartition partielle inférieure de fluide (134), le distributeur inférieur (135) comporte en outre une tubulure hydraulique partielle inférieure (143) configurée pour permettre un écoulement du fluide caloporteur (3) entre la boite de répartition partielle inférieure de fluide (134) et la borne inférieure (142),
la boite de répartition supérieure de fluide (133) comportant un dispositif de clapet hydraulique supérieur (31), et la boite de répartition inférieure de fluide (132) comportant un dispositif de clapet hydraulique inférieur (32),
le dispositif de clapet hydraulique supérieur (31) et le dispositif de clapet hydraulique inférieur (32) étant configurés pour être ouverts lors d'un écoulement de fluide caloporteur (3) entrant par la borne supérieure (141) et fermés lors d'un écoulement de fluide caloporteur (3) entrant par la borne inférieure (142).

2. Système de stockage thermique (1) selon la revendication 1, **caractérisé en ce qu'**il est configuré pour comporter une seule passe de fluide caloporteur (3) lors d'un écoulement depuis la borne supérieure (141) vers la borne inférieure (142).

3. Système de stockage thermique (1) selon l'une quelconque des revendications 1 ou 2, **caractérisé en ce qu'**il est configuré pour comporter un nombre impair de passes de fluide caloporteur (3) lors d'un écoulement depuis la borne inférieure (142) vers la borne supérieure (141), et comportant au moins trois passes.

4. Système de stockage thermique (1) selon l'une quelconque des revendications 1 à 3, **caractérisé en ce qu'**il est configuré pour répartir un écoulement de fluide caloporteur (3), s'écoulant depuis la borne supérieure (141) vers la borne inférieure (142), dans tous les conduits (14) du faisceau (111) de conduits.

5. Système de stockage thermique (1) selon l'une quelconque des revendications 1 à 4, **caractérisé en ce qu'**il est configuré pour faire parcourir un écoulement de fluide caloporteur (3), s'écoulant depuis la borne inférieure (142) vers la borne supérieure (141), dans le troisième conduit (14c), puis le deuxième conduit (14b) puis le premier conduit (14a).

6. Système de stockage thermique (1) selon l'une quelconque des revendications 1 à 5, dans lequel le dispositif de clapet hydraulique supérieur (31) comporte un système passif configuré pour être ouvert par une différence de pression du fluide caloporteur (3) de part et d'autre du dispositif de clapet hydraulique supérieur (31).

7. Système de stockage thermique (1) selon l'une quelconque des revendications 1 à 6, dans lequel le dispositif de clapet hydraulique inférieur (32) comporte un système passif configuré pour être ouvert par une différence de pression du fluide caloporteur (3) de part et d'autre du dispositif de clapet hydraulique inférieur (32).

8. Système de stockage thermique (1) selon l'une quelconque des revendications 1 à 7, dans lequel au moins l'un du dispositif de clapet hydraulique supérieur (31) et du dispositif de clapet hydraulique inférieur (32) comporte au moins un clapet à ressort.

9. Système de stockage thermique (1) selon l'une quelconque des revendications 1 à 8, dans lequel l'échangeur thermique (11) comporte une plaque collectrice supérieure (112) et une plaque collectrice inférieure (113), et les conduits du faisceau (111) de conduits (14) s'étendent de la plaque collectrice supérieure (112) à la plaque collectrice inférieure (113).

10. Système de stockage thermique (1) selon l'une quelconque des revendications 1 à 9, dans lequel au moins l'un des conduits (14) du faisceau (111) de conduits comporte au moins un tube (114).

11. Système de stockage thermique (1) selon la revendication 10, dans lequel l'au moins un tube (114) comporte une surface extérieure portant des ailettes (115) d'échange thermique.

12. Système de stockage thermique (1) selon l'une quelconque des revendications 1 à 11, dans lequel au moins l'un des conduits (14) du faisceau (111) de conduits comporte au moins une plaque délimitant un passage du fluide (3) dans un conduit.

13. Système de stockage thermique (1) selon l'une quelconque des revendications 1 à 12, comportant au moins une cloison (116) délimitant au moins un conduit (14), le système de stockage thermique (1) étant configuré pour que l'écoulement de fluide (3) contourne la cloison (116) lors d'un écoulement de fluide caloporteur (3) entrant par la borne inférieure (142).

14. Système de stockage thermique (1) selon l'une quelconque des revendications 1 à 13, dans lequel l'échangeur thermique (11) comporte au moins une capsule (20) contenant le matériau à changement de phase (2).

15. Système de stockage thermique (1) selon l'une quelconque des revendications 1 à 14, comportant une calandre (12) contenant le matériau à changement de phase (2), l'échangeur thermique (11) étant disposé dans la calandre (12).

16. Système de stockage thermique (1) selon l'une quelconque des revendications 1 à 15, comportant au moins un élément de constriction, l'au moins un élément de constriction étant disposé dans une partie d'au moins une tubulure hydraulique, en particulier une tubulure hydraulique de la borne supérieure (141).

## Patentansprüche

1. Wärmespeichersystem (1), das ein phasenveränderliches Material (2) bereitstellt, wobei das Wärmespeichersystem (1) das phasenveränderliche Material (2) und einen Wärmetauscher (11) aufweist, der eine obere Klemme (141) und eine untere Klemme (142) aufweist, die so ausgebildet sind, dass sie einen Ein- oder Ausgang eines Wärmeträgerfluids (3) in das Wärmespeichersystem (1) bilden,
wobei der Wärmetauscher (11) ein Bündel (111) von Leitungen (14) aufweist, das sich zwischen der oberen Klemme (141) und der unteren Klemme (142) erstreckt, wobei das Bündel (111) von Leitungen (14) mindestens drei Leitungen aufweist, die eine erste Leitung (14a), eine zweite Leitung (14b) und eine dritte Leitung (14c) einschließen, wobei jede der Leitungen (14) so ausgebildet ist, dass sie einen Durchfluss des Wärmeträgerfluids (3) aufnimmt, wobei mindestens ein Teil jeder der Leitungen (14) mit dem phasenveränderlichen Material (2) in Kontakt steht,
wobei das Wärmespeichersystem (1) einen oberen Verteiler (130), der sich zwischen der oberen Klemme (141) und dem Bündel (111) von Leitungen (14) erstreckt, und einen unteren Verteiler (135) aufweist, der sich zwischen dem Bündel (111) von Leitungen (14) und der unteren Klemme (142) erstreckt,
**dadurch gekennzeichnet, dass** der obere Verteiler (130) einen oberen Teilverteilerkasten (131) und einen oberen Fluidverteilerkasten (133) aufweist, und der untere Verteiler (135) einen unteren Teilverteilerkasten (134) und einen unteren Fluidverteilerkasten (132) aufweist,
mindestens die erste Leitung (14a) einerseits in den oberen Teilverteilerkasten (131) außerhalb des oberen Fluidverteilerkastens (133) und andererseits in den unteren Fluidverteilerkasten (132) außerhalb des unteren Fluidteilverteilerkastens (134) mündet, mindestens die zweite Leitung (14b) einerseits in den oberen Fluidverteilerkasten (133) und andererseits in den unteren Fluidverteilerkasten (132) außerhalb des unteren Fluidteilverteilerkastens (134) mündet, und mindestens die dritte Leitung (14c) einerseits in den oberen Fluidverteilerkasten (133) und andererseits in den unteren Fluidteilverteilerkasten (134) mündet,
der untere Verteiler (135) ferner einen unteren hydraulischen Teilstutzen (143) aufweist, der so ausgebildet ist, dass er einen Durchfluss des Wärmeträgerfluids (3) zwischen dem unteren Fluidteilverteilerkasten (134) und der unteren Klemme (142) ermöglicht,
der obere Fluidverteilerkasten (133) eine obere hydraulische Ventilvorrichtung (31) aufweist, und der untere Fluidverteilerkasten (132) eine untere hydraulische Ventilvorrichtung (32) aufweist,
wobei die obere hydraulische Ventilvorrichtung (31) und die untere hydraulische Ventilvorrichtung (32) so ausgebildet sind, dass sie bei einem Durchfluss von Wärmeträgerfluid (3), das durch die obere Klemme (141) einströmt, geöffnet sind und bei einem Durchfluss von Wärmeträgerfluid (3), das durch die untere Klemme (142) einströmt, geschlossen sind.

2. Wärmespeichersystem (1) nach Anspruch 1, **dadurch gekennzeichnet, dass** es so ausgebildet ist, dass es bei einem Durchfluss von der oberen Klemme (141) zur unteren Klemme (142) einen einzigen Durchlauf von Wärmeträgerfluid (3) aufweist.

3. Wärmespeichersystem (1) nach einem der Ansprüche 1 oder 2, **dadurch gekennzeichnet, dass** es so ausgebildet ist, dass es eine ungerade Anzahl von Durchläufen von Wärmeträgerfluid (3) bei einem Durchfluss von der unteren Klemme (142) zur oberen Klemme (141) aufweist und mindestens drei Durchläufe aufweist.

4. Wärmespeichersystem (1) nach einem der Ansprüche 1 bis 3, **dadurch gekennzeichnet, dass** es so ausgebildet ist, dass es einen Durchfluss von Wärmeträgerfluid (3), der von der oberen Klemme (141) zur unteren Klemme (142) fließt, in alle Leitungen (14) des Bündels (111) von Leitungen verteilt.

5. Wärmespeichersystem (1) nach einem der Ansprüche 1 bis 4, **dadurch gekennzeichnet, dass** es so ausgebildet ist, dass es einen Durchfluss von Wärmeträgerfluid (3), das von der unteren Klemme (142) zur oberen Klemme (141) fließt, in die dritte Leitung (14c), danach in die zweite Leitung (14b) und danach in die erste Leitung (14a) fließen lässt.

6. Wärmespeichersystem (1) nach einem der Ansprüche 1 bis 5, wobei die obere hydraulische Ventilvorrichtung (31) ein passives System aufweist, das so ausgebildet ist, dass es durch einen Druckunterschied des Wärmeträgerfluids (3) auf beiden Seiten der oberen hydraulischen Ventilvorrichtung (31) geöffnet wird.

7. Wärmespeichersystem (1) nach einem der Ansprüche 1 bis 6, wobei die untere hydraulische Ventilvorrichtung (32) ein passives System aufweist, das so ausgebildet ist, dass es durch einen Druckunterschied des Wärmeträgerfluids (3) auf beiden Seiten der unteren hydraulischen Ventilvorrichtung (32) geöffnet wird.

8. Wärmespeichersystem (1) nach einem der Ansprüche 1 bis 7, wobei mindestens eine der oberen hydraulischen Ventilvorrichtung (31) und der unteren hydraulischen Ventilvorrichtung (32) mindestens ein Federventil aufweist.

9. Wärmespeichersystem (1) nach einem der Ansprüche 1 bis 8, wobei der Wärmetauscher (11) eine obere Sammelplatte (112) und eine untere Sammelplatte (113) aufweist, und die Leitungen des Bündels (111) von Leitungen (14) sich von der oberen Sammelplatte (112) zur unteren Sammelplatte (113) erstrecken.

10. Wärmespeichersystem (1) nach einem der Ansprüche 1 bis 9, wobei mindestens eine der Leitungen (14) des Bündels (111) von Leitungen mindestens ein Rohr (114) aufweist.

11. Wärmespeichersystem (1) nach Anspruch 10, wobei das mindestens eine Rohr (114) eine Außenfläche mit Wärmeaustauschrippen (115) aufweist.

12. Wärmespeichersystem (1) nach einem der Ansprüche 1 bis 11, wobei mindestens eine der Leitungen (14) des Bündels (111) von Leitungen mindestens eine Platte aufweist, die einen Durchlauf des Fluids (3) in einer Leitung begrenzt.

13. Wärmespeichersystem (1) nach einem der Ansprüche 1 bis 12, das mindestens eine Trennwand (116) aufweist, die mindestens eine Leitung (14) begrenzt, wobei das Wärmespeichersystem (1) so ausgebildet ist, dass der Fluiddurchfluss (3) die Trennwand (116) bei einem Durchfluss von Wärmeträgerfluid (3), das durch die untere Klemme (142) einströmt, umgeht.

14. Wärmespeichersystem (1) nach einem der Ansprüche 1 bis 13, wobei der Wärmetauscher (11) mindestens eine Kapsel (20) aufweist, die das phasenveränderliche Material (2) enthält.

15. Wärmespeichersystem (1) nach einem der Ansprüche 1 bis 14, das einen Kalander (12), der das phasenveränderliche Material (2) enthält, aufweist, wobei der Wärmetauscher (11) in dem Kalander (12) angeordnet ist.

16. Wärmespeichersystem (1) nach einem der Ansprüche 1 bis 15, das mindestens ein Schrumpfelement aufweist, wobei das mindestens eine Schrumpfelement in einem Teil von mindestens einem hydraulischen Stutzen, insbesondere einem hydraulischen Stutzen der oberen Klemme (141) angeordnet ist.

## Claims

1. Thermal storage system (1) using a phase-changing material (2), the thermal storage system (1) comprising the phase-changing material (2), and a heat exchanger (11) comprising an upper terminal (141) and a lower terminal (142) configured to form an inlet or outlet of a heat-transfer fluid (3) into the thermal storage system (1),
the heat exchanger (11) comprising a bundle (111) of conduits (14) extending between the upper terminal (141) and the lower terminal (142), the bundle (111) of conduits (14) comprising at least three conduits including a first conduit (14a), a second conduit (14b) and a third conduit (14c), each of the conduits (14) being configured to receive a flow of the heat-transfer fluid (3), at least a portion of each of the conduits (14) being in contact with the phase-changing material (2),
the thermal storage system (1) comprising an upper distributor (130) extending between the upper terminal (141) and the bundle (111) of conduits (14), and a lower distributor (135) extending between the bundle (111) of conduits (14) and the lower terminal (142),
**characterised in that** the upper distributor (130) comprises an upper partial distribution box (131) and an upper fluid distribution box (133) and the lower distributor (135) comprises a lower partial fluid distribution box (134) and a lower fluid distribution box (132),
at least the first conduit (14a) opens, on the one hand, into the upper partial distribution box (131) outside the upper fluid distribution box (133) and, on the other hand, into the lower fluid distribution box (132) outside the lower partial fluid distribution box (134), at least the second conduit (14b) opens, on the one hand, into the upper fluid distribution box (133) and, on the other hand, into the lower fluid distribution box (132) outside the lower partial fluid distribution box (134), and at least the third conduit (14c) opens, on the one hand, into the upper fluid distribution box (133) and, on the other hand, into the lower partial fluid distribution box (134),
the lower distributor (135) further comprises a lower partial hydraulic tubing (143) configured to allow a flow of the heat-transfer fluid (3) between the lower partial fluid distribution box (134) and the lower terminal (142),
the upper fluid distribution box (133) comprising an upper hydraulic valve device (31), and the lower fluid distribution box (132) comprising a lower hydraulic valve device (32),
the upper hydraulic valve device (31) and the lower hydraulic valve device (32) being configured to be open during a flow of heat-transfer fluid (3) entering through the upper terminal (141) and closed during a flow of heat-transfer fluid (3) entering through the lower terminal (142).

2. Thermal storage system (1) according to claim 1, **characterised in that** it is configured to comprise a single pass of heat-transfer fluid (3) during a flow from the upper terminal (141) to the lower terminal (142).

3. Thermal storage system (1) according to any one of claims 1 or 2, **characterised in that** it is configured to comprise an odd number of passes of heat-transfer fluid (3) during a flow from the lower terminal (142) to the upper terminal (141) and comprising at least three passes.

4. Thermal storage system (1) according to any one of claims 1 to 3, **characterised in that** it is configured to distribute a flow of heat-transfer fluid (3), flowing from the upper terminal (141) to the lower terminal (142), in all of the conduits (14) of the bundle (111) of conduits.

5. Thermal storage system (1) according to any one of claims 1 to 4, **characterised in that** it is configured to route a flow of heat-transfer fluid (3), flowing from the lower terminal (142) to the upper terminal (141), into the third conduit (14c), then the second conduit (14b) then the first conduit (14a).

6. Thermal storage system (1) according to any one of claims 1 to 5, wherein the upper hydraulic valve device (31) comprises a passive system configured to be opened by a pressure difference of the heat-transfer fluid (3) on either side of the upper hydraulic valve device (31).

7. Thermal storage system (1) according to any one of claims 1 to 6, wherein the lower hydraulic valve device (32) comprises a passive system configured to be opened by a pressure difference of the heat-transfer fluid (3) on either side of the lower hydraulic valve device (32).

8. Thermal storage system (1) according to any one of claims 1 to 7, wherein at least one amongst the upper hydraulic valve device (31) and the lower hydraulic valve device (32) comprises at least one spring-loaded valve.

9. Thermal storage system (1) according to any one of claims 1 to 8, wherein the heat exchanger (11) comprises an upper collector plate (112) and a lower collector plate (113), and the conduits of the bundle (111) of conduits (14) extend from the upper collector plate (112) to the lower collector plate (113).

10. Thermal storage system (1) according to any one of claims 1 to 9, wherein at least one of the conduits (14) of the bundle (111) of conduits comprises at least one tube (114).

11. Thermal storage system (1) according to claim 10, wherein the at least one tube (114) comprises an external surface bearing heat exchange fins (115).

12. Thermal storage system (1) according to any one of claims 1 to 11, wherein at least one of the conduits (14) of the bundle (111) of conduits comprises at least one plate delimiting a passage of the fluid (3) in a conduit.

13. Thermal storage system (1) according to any one of claims 1 to 12, comprising at least one partition (116) delimiting at least one conduit (14), the thermal storage system (1) being configured so that the flow of fluid (3) bypasses the partition (116) during a flow of heat-transfer fluid (3) entering through the lower terminal (142).

14. Thermal storage system (1) according to any one of claims 1 to 13, wherein the heat exchanger (11) comprises at least one capsule (20) containing the phase-changing material (2).

15. Thermal storage system (1) according to any one of claims 1 to 14, comprising a radiator grille (12) containing the phase-changing material (2), the heat exchanger (11) being disposed in the radiator grille (12).

16. Thermal storage system (1) according to any one of claims 1 to 15, comprising at least one constriction element, the at least one constriction element being disposed in a portion of at least one hydraulic tubing, in particular a hydraulic tubing of the upper terminal (141).
